(19) Europäisches Patentamt
European Patent Office
Office européen des brevets

(11) **EP 1 541 026 B1**

(12) **FASCICULE DE BREVET EUROPEEN**

(45) Date de publication et mention
de la délivrance du brevet:
**02.04.2014 Bulletin 2014/14**

(21) Numéro de dépôt: **04292966.1**

(22) Date de dépôt: **13.12.2004**

(51) Int Cl.:
*A21D 2/18* *(2006.01)*      *A21D 13/08* *(2006.01)*
*A21D 13/02* *(2006.01)*     *A21D 13/04* *(2006.01)*
*A21D 13/06* *(2006.01)*     *A23L 1/164* *(2006.01)*
*A23L 1/182* *(2006.01)*     *A23L 1/29* *(2006.01)*
*A23L 1/30* *(2006.01)*      *A23L 1/10* *(2006.01)*
*A23K 1/18* *(2006.01)*      *A23L 1/168* *(2006.01)*

(54) **Produits céréaliers possédant un fort pouvoir anti-oxydant**

Getreideprodukten mit Hochantioxidationseigenschaften

Cereal products with high antioxidant power

(84) Etats contractants désignés:
**AT BE BG CH CY CZ DE DK EE ES FI FR GB GR HU IE IS IT LI LT LU MC NL PL PT RO SE SI SK TR**

(30) Priorité: **12.12.2003 FR 0314644**

(43) Date de publication de la demande:
**15.06.2005 Bulletin 2005/24**

(73) Titulaire: **Intercontinental Great Brands LLC East Hanover, NJ 07936 (US)**

(72) Inventeurs:
- **Jimenez, Liliana G.**
  **91190 Gif sur Yvette (FR)**
- **Darde, Olivier**
  **91120 Palaiseau (FR)**
- **Lamiche, Chantal**
  **91370 Verrieres le Buisson (FR)**
- **Mathieu, Florence**
  **92330 Sceaux (FR)**
- **Schlumberger, Armelle**
  **75007 Paris (FR)**
- **Cohin, Olivier**
  **91300 Massy Villaine (FR)**

(74) Mandataire: **Cabinet Plasseraud**
**52, rue de la Victoire**
**75440 Paris Cedex 09 (FR)**

(56) Documents cités:
| | |
|---|---|
| EP-A- 1 214 891 | WO-A-03/056939 |
| GB-A- 744 091 | GB-A- 781 087 |
| GB-A- 1 290 811 | US-A- 4 097 613 |
| US-A- 4 764 388 | US-A- 5 200 218 |
| US-A- 5 762 936 | US-A- 6 056 990 |
| US-A1- 2002 187 211 | US-A1- 2003 211 184 |

US-B1- 6 605 296     US-B2- 6 558 930

- **DATABASE FSTA [en ligne] INTERNATIONAL FOOD INFORMATION SERVICE (IFIS), FRANKFURT-MAIN, DE EL-LATIF A R M A ET AL:** 'Using millet flour and sodium stearoyl-2-lactylate in the production of cookie from hard wheat flour.' Database accession no. 88-1-02-m0129
- **MILLER HAROLD E ET AL: "Antioxidant content of whole grain breakfast cereals, fruits and vegetables", JOURNAL OF THE AMERICAN COLLEGE OF NUTRITION, vol. 19, no. 3 Supplement, June 2000 (2000-06), pages 312S-319S, ISSN: 0731-5724**
- **DATABASE FSTA [en ligne] INTERNATIONAL FOOD INFORMATION SERVICE (IFIS), FRANKFURT-MAIN, DE SO YOUNG BU ET AL:** 'Antioxidant activity and total phenolic compounds in grain extracts of wheat, barley, and oat.' Database accession no. 2003-00-m0192
- **DATABASE BIOSIS [en ligne] BIOSCIENCES INFORMATION SERVICE, PHILADELPHIA, PA, US Juin 2000 ZIELINSKI H ET AL:** 'Antioxidant activity and total phenolics in selected cereal grains and their different morphological fractions' Database accession no. PREV200000326091
- **DATABASE FSTA [en ligne] INTERNATIONAL FOOD INFORMATION SERVICE (IFIS), FRANKFURT-MAIN, DE LLOYD B J ET AL:** 'Effects of commercial processing on antioxidants in rice bran.' Database accession no. 2001-00-m0035

- **DATABASE FSTA [en ligne] INTERNATIONAL FOOD INFORMATION SERVICE (IFIS), FRANKFURT-MAIN, DE SO YOUNG BU ET AL: 'Antioxidant activity and total phenolic compounds in grain extracts of wheat, barley, and oat.' Database accession no. 2003-00-m0192**
- **DATABASE FSTA [en ligne] INTERNATIONAL FOOD INFORMATION SERVICE (IFIS), FRANKFURT-MAIN, DE BERGLUND P T ET AL: 'Food uses of waxy hull-less barley.' Database accession no. 93-1-02-m0047**
- **DATABASE FSTA [en ligne] INTERNATIONAL FOOD INFORMATION SERVICE (IFIS), FRANKFURT-MAIN, DE NETTLES E M: 'Functionality of oat-wheat composite flours in sugar-snap cookies: effect of method of milling, processing, oat cultivar, and wheat cultivar.' Database accession no. 95-1-05-m0088**
- **DATABASE BIOSIS [en ligne] BIOSCIENCES INFORMATION SERVICE, PHILADELPHIA, PA, US 1989 SINGH N ET AL: 'RHEOLOGICAL AND COOKIE MAKING STUDIES ON WHEAT-RICE FLOUR BLENDS' Database accession no. PREV199089114495**

Remarques:
Le dossier contient des informations techniques présentées postérieurement au dépôt de la demande et ne figurant pas dans le présent fascicule.

**Description**

La présente invention concerne un produit céréalier possédant un fort pouvoir anti-oxydant, un procédé pour sa fabrication, ainsi que son utilisation dans le but d'augmenter l'apport en anti-oxydants naturels et/ou en vitamines B1, B9, et/ou en minéraux : zinc, magnésium et sélénium et/ou en fibres ; ainsi que de prévenir les effets délétères liés au stress oxydatif et du déclin des fonctions cognitive et immunitaire.

Les céréales complètes sont riches en fibres, amidon, protéines, vitamines et minéraux. Elles sont également des sources importantes d'amidon résistant, d'oligosaccharides, de minéraux-trace et d'autres composés d'intérêt dont certains anti-oxydants comme des polyphénols, des phyto-oestrogènes, etc. La plupart de ces constituants ne se trouvent pas répartis équitablement au sein du grain de céréale. Or, presque tous les produits céréaliers consommés aujourd'hui le sont sous forme de céréales raffinées ; pendant la mouture, certaines fractions peuvent être écartées, ce qui entraîne généralement un appauvrissement important en de nombreux constituants des farines obtenues. En effet, ces constituants sont répartis inégalement dans la graine.

- vitamines et minéraux : en moyenne, seulement 25 % des minéraux de la graine sont contenus dans l'endosperme, le reste se trouvant généralement dans les enveloppes externes : couche à aleurones, germe et son.
- fibres : ce terme désigne principalement certains composés de la paroi végétale que sont la cellulose, l'hémicellulose et la pectine (les polysaccharides non-amidon). Certains auteurs incluent également l'amidon résistant. La lignine, un composé non saccharidique de la paroi végétale, est elle aussi souvent considérée comme faisant partie des fibres.
- les polyphénols : les plus courants sont les acides férulique et *p*-coumarique, mais des phyto-oestrogènes, lignanes et flavonoïdes sont également présents. Tous ces constituants liés aux pentosanes semblent se retrouver principalement dans la couche à aleurones et dans le son.

Cette répartition particulière entraîne presque inévitablement des pertes lors de la mouture.

Plusieurs tissus du grain de blé, couche à aleurones, son et germe, apparaissent donc comme particulièrement intéressants d'un point de vue nutritionnel. Cependant, ils se trouvent généralement écartés au cours de la fabrication de la farine raffinée.

La mouture est essentiellement le procédé qui permet d'obtenir de la farine à partir d'une graine entière. Au cours de cette étape, le son et le germe sont séparés de l'endosperme riche en amidon. La farine raffinée provient donc presque uniquement de l'endosperme du grain ; les autres fractions du grain en sont presque totalement exclues, ce qui entraîne la perte des éléments contenus préférentiellement dans le son et le germe.

Les fractions obtenues (germe, sons, remoulages, etc.) peuvent éventuellement, à l'exception du germe, être réincorporées dans la farine raffinée pour former de la farine plus ou moins "complète".

La farine blanche, issue de l'endosperme, est généralement nettement moins riche en micronutriments et en fibres que les autres fractions. En utilisant de la farine raffinée, on perd donc une grande partie du potentiel nutritionnel du grain des céréales.

Ainsi, lors de l'utilisation de la farine raffinée de blé, il disparaît finalement environ ¾ de la teneur du grain en minéraux entre le grain de blé et la farine blanche. Cette dernière est également beaucoup moins riche en fibres que le grain de blé entier (4 % contre 12 %), même si elle est proportionnellement plus riche en fibres solubles (40 % des fibres totales contre moins de 20 % pour le grain entier).

Au cours du raffinage, du fait de la séparation de la majeure partie du son et d'une partie du germe, il y a également, généralement, perte de nombreux constituants des céréales complètes comme les lignanes, les phyto-oestrogènes, les composés phénoliques et l'acide phytique.

Le tableau 1 présente la perte moyenne de micronutriments du blé lors de la fabrication d'une farine blanche conventionnelle :

**Tableau 1**

| Perte de micronutriments du blé lors de la fabrication de la farine blanche (données de la littérature) | | | |
|---|---|---|---|
| Nutriments (mg/100 g) | Grain entier | Farine blanche (T55) | Perte |
| Vitamine B1 | 0.5 | 0.2 | 60% |
| Vitamine B2 | 0.15 | 0.05 | 67 % |
| Vitamine B6 | 0.5 | 0.05 | 90 % |
| Vitamine E | 3.5 | 0.5 | 86 % |

(suite)

| Perte de micronutriments du blé lors de la fabrication de la farine blanche (données de la littérature) | | | |
|---|---|---|---|
| Nutriments (mg/100 g) | Grain entier | Farine blanche (T55) | Perte |
| Magnésium | 150 | 30 | 80 % |
| Fer | 6 | 1.5 | 75 % |
| Zinc | 4.1 | 0.8 | 80 % |
| Polyphénols | 90-198 | 6 | 93 - 97 % |
| Fibres | 12 | 2.1 | 82.5 % |

Ainsi, plus de 60 % de tous les micronutriments du blé ne sont généralement plus retrouvés dans la farine blanche.

Or ces micronutriments ont été associés à un moindre risque de diverses pathologies, telles certaines maladies cardiovasculaires, et certains cancers, principalement, le cancer du colon, lorsqu'ils sont consommés dans les céréales complètes.

De longues études d'observation ont montré une réduction du risque des maladies chroniques avec une consommation élevée de céréales. Cependant cette diminution n'est pas liée à la consommation de l'endosperme de céréales ni aux fibres isolées, mais à l'association des polyphénols et des fibres contenues dans les céréales complètes. Des études d'intervention ont été réalisées afin de déterminer la synergie de cet effet sur des marqueurs associés aux maladies chroniques. Les résultats ont confirmé que les effets bénéfiques résultent de la consommation de céréales complètes (non-raffinées) ou de l'association des polyphénols et fibres.

Les données récentes de la littérature montrent un intérêt croissant des nutriments et micronutriments, notamment ceux possédant un fort pouvoir anti-oxydant, présents naturellement dans les céréales, mais qui ne sont malheureusement plus présents dans la farine blanche.

Il serait donc souhaitable de pouvoir fournir au consommateur des produits alimentaires comportant ces nutriments et micro-nutriments.

Malheureusement, ceci apparaît très difficile, compte tenu du fait notamment que les produits alimentaires en question doivent non seulement répondre de façon optimale à des exigences nutritionnelles bien précises, mais doivent en même temps présenter des qualités texturales et organoleptiques satisfaisantes, tout en étant susceptibles d'être fabriqués selon des procédés et des paramètres opératoires conventionnels ou peu modifiés. Ainsi, pour ne prendre que cet exemple, la demande de brevet récemment publiée US2003/0104103 A1 décrit un procédé de préparation de produits alimentaires contenant du son, mais ce procédé fait intervenir un traitement du son visant à réduire sa teneur en acide férulique, notamment pour en améliorer le goût.

Le document JP62236453 décrit des produits de pâtisserie comprenant de la farine de son de riz et ayant des bonnes qualités de conservation et de bonnes propriétés nutritives. Le document US2176037 décrit une nouvelle farine de céréales ayant des propriétés stabilisantes. L'article publié dans Biosciences information service, Philadelphia, PA, US ; 1989 par Singh N et al, intitulé «Rheological and cookie making studies on wheat-rice flour blends″ décrit des cookies dans lesquels 10% de farine de blé sont remplacés par de la farine de riz. L'article publié dans International Food Information Service (IFIS), Frankfurt-Main, DE; par Nettles E M, intitulé «Functionality of oat-wheat composite flours in surgar-snap cookies: effect of method of milling, processing, oat cultivar, and wheat cultivar″ décrit des cookies comprenant de 15 à 30% de farine d'avoine. Un autre article publié dans l'IFIS, Frankfurt-Main, DE ; par Berglund PT et al, intitulé *food uses of waxy hull-less barley »* décrit des produits alimentaires dans lesquels 25 à 100% de farine de blé, d'avoine ou de riz sont substitués par de la farine d'orge. L'article de El-Latif Arma et al, également publié dans l'IFIS, Frankfurt, intitulé «Using millet flour and sodium steroyl-2-lactylate in the production of cookie from hard whear flour» décrit différents mélanges de farine de blé et de millet et leur utilisation dans des cookies. La publication dans le Journal of the American College of Nutrition, vol 19, n°3, suppl. juin 2000, pages 312S -319S de Miller Harold et al, intitulée « Antioxydant content of whole grain breakfast cereals, fruits and vegetables » décrit l'effet antioxydant de farines de riz et de maïs. L'article publié dans Biosciences information service, Philadelphia, PA, US ; juin 2000 par Zielinski H et al, intitulé «Antioxydant activity and total phenolic in selected cereal grains and their different morphological fractions » enseigne l'effet antioxydant d'extrait aqueux de farine de sarrasin. La publication de Lloyd BJ et al, également publiée dans l'IFIS, Frankfurt, intitulée «effects of commercial processing on antioxidant rice bran» décrit l'influence de divers procédés de mouture et de préparation sur les propriétés antioxydantes de sons de riz. Enfin, toujours dans l'IFIS, Frankfurt, l'article de So Young Bu et al intitulé «Antioxidant activity and total phenolic compound in grain extracts of wheat, barley, and oat» enseigne que les céréales riches en phénols présentent de fortes propriétés antioxydantes.

Or, il est du mérite de la Société Demanderesse d'avoir réussi à vaincre tous les préjugés de l'état de la technique et d'arriver à mettre au point un produit céréalier répondant à la fois aux exigences nutritionnelles, texturales et organoleptiques, pouvant être fabriqué, moyennant certaines adaptations, sur des lignes de fabrication traditionnelles, et présentant une forte densité nutritionnelle ainsi qu'un très fort pouvoir anti-oxydant, apte à augmenter le contenu en antioxydants naturels dans l'intestin et à améliorer la résistance de l'organisme au stress oxydatif.

La présente invention concerne donc un produit céréalier possédant une bonne densité nutritionnelle, un fort pouvoir anti-oxydant, un procédé pour sa fabrication, ainsi que son utilisation dans le but d'augmenter l'apport en anti-oxydants naturels et/ou en vitamines B1, B9, et/ou en minéraux : zinc, magnésium et sélénium et/ou en fibres ; ainsi que de prévenir les effets délétères liés au stress oxydatif et du déclin des fonctions cognitive et immunitaire .

Par produit céréalier, on entend selon l'invention tout produit alimentaire contenant une quantité significative d'au moins une fraction de céréale ou pseudo-céréale, contenant par exemple au moins 10%, préférablement au moins 20%, plus préférablement au moins 30% en masse de ladite fraction rapportée à la masse de produit fini. A titre d'exemples de produits céréaliers, on peut citer les produits de biscuiterie, les produits de panification sèche, les produits de type 'barre céréalière', les produits de type 'céréales pour le petit déjeuner'.

Par produit de biscuiterie, on entend selon l'invention tout type de produit contenant des céréales, notamment sous forme de farine, de la matière grasse et éventuellement des oeufs, et ayant subi un traitement de cuisson. Ce sont par exemple les biscuits, comme les biscuits secs, les biscuits salés, les biscuits de type 'apéritif, les biscuits sucrés, les biscuits à pâte dure ou semi-dure, les produits de pâtisserie, les gâteaux, les madeleines, les barquettes, les financiers, les boudoirs, les gaufrettes, les produits de type 'snack', les crackers, etc.

Par céréale ou pseudo-céréale, on entend selon l'invention toute plante dont les grains servent à la nourriture de l'homme et des animaux omnivores. Ce sont par exemple le blé, le seigle, l'avoine, l'orge, le riz, le maïs, le millet, le sorgho et le sarrasin.

Par fraction de céréale ou de pseudo-céréale, on entend tout produit ou sous-produit dérivé d'une céréale ou d'une pseudo-céréale. Ce sont préférentiellement des produits obtenus par traitement mécanique des grains desdites céréales ou pseudo-céréales, par exemple des produits ou co-produits de meunerie ou de mouture. Des exemples en sont les farines (par exemple farine de queue), les sons (par exemple sons fins, sons gros), les remoulages (ou produits de remoulage) comme les remoulages blancs ou les remoulages bis, et les germes.

Par pouvoir anti-oxydant ou, de façon équivalente, capacité anti-oxydante, on entend selon l'invention la capacité d'une substance à inhiber ou retarder l'oxydation d'une molécule cible soumise à une attaque essentiellement de type radicalaire. Une attaque de type radicalaire peut survenir en diverses circonstances, par exemple en présence d'espèces oxygénées réactives, telles les radicaux hydroxyle, les superoxydes, les radicaux alkoxyle et alkylperoxyle, l'oxygène singulet. Ces espèces radicalaires peuvent résulter notamment de la réduction incomplète de l'oxygène dans la chaîne de transport des électrons.

Afin d'évaluer une valeur de pouvoir anti-oxydant, on compare généralement le temps et/ou le degré d'inhibition des réactions radicalaires provoquées par le composant étudié avec ceux d'un antioxydant référence. En général la forme hydrosoluble de la vitamine E (Trolox) est prise comme référence. Il s'agit généralement d'une analyse quantitative globale qui ne détermine pas de façon spécifique la nature des anti-oxydants concernés. Pour cette analyse, plusieurs systèmes de production des radicaux (hydroxyle, peroxyle) peuvent être utilisés, ainsi que plusieurs molécules cibles de l'attaque des radicaux. Plusieurs méthodes ont été développées et ont été appliquées à la mesure du pouvoir antioxydant d'extraits d'aliments ou de fluides biologiques. La Société Demanderesse a choisi la méthode ORAC (Oxygen Radical Absorbance Capacity) car elle présente de multiples atouts pour des échantillons alimentaires.

La méthode ORAC mesure dans le temps la perte d'intensité de fluorescence de la fluorescéine en présence de radicaux peroxyle et ce jusqu'à disparition totale de la fluorescence. La présence de composés antioxydants dans l'échantillon inhibe l'action oxydante des radicaux libres envers la sonde fluorescente, et le calcul de l'aire sous la courbe (AUC) par rapport à un blanc permet donc la détermination quantitative relative de la capacité anti-oxydante de ces composés envers les radicaux libres. Cette technique de calcul informe sur deux paramètres indicateurs de la capacité anti-oxydante : le temps d'inhibition et le pourcentage d'inhibition de l'activité oxydante des radicaux libres en présence d'antioxydants.

$$\text{Capacité antioxydante} = AUC_{antioxydant} - AUC_{blanc}$$

$$\text{Valeur ORAC relative} =$$

$$[(AUC_{éch} - AUC_{blanc}) / (AUC_{std} - AUC_{blanc})] \times (\text{molarité std} / \text{molarité éch.})$$

Cette formule s'applique également pour l'analyse de composés antioxydants purs de molarités connues. Dans le cas des produits céréaliers selon l'invention, le paramètre molarité (mole/L) est remplacé par des valeurs exprimées en g/L. La valeur ORAC finale est alors exprimée en μmol de Trolox (c'est-à-dire en Équivalents de Trolox, ou TE) par gramme de matière sèche. Cette méthode est sensible, fiable et robuste. Elle est reproductible dans le temps avec un coefficient de variation de la méthode inférieur à 15 %, une limite de détection basse équivalente à 5 μM et une limite de quantification de 12.5 μM. C'est à dire que des valeurs de capacité anti-oxydante supérieures à 12.5 μmole TE/g sont complètement fiables. En revanche, des composés antioxydants présents entre 5 et 12.5 sont détectables mais non quantifiables précisément par cette méthode.

La présente invention concerne donc un produit céréalier de biscuiterie ou de panification sèche contenant de la farine de blé, caractérisé en ce que 20-40% en masse de farine de blé sont substitués par une fraction de céréale ou pseudo céréale constituée par :

- 15-25% de farine de sarrasin + 5-15% de son de riz, ou
- 15-25% de son de riz + 5-15% de farine de sarrasin, ou
- 15-25% de son de riz + 5-15% de remoulages blancs de blé, ou
- 5-15% de farine de sarrasin + 5-15% de son de riz + 5-15% de germes de blé,

ladite fraction de céréale ou de pseudo-céréale représentant 10-25% en masse par rapport à la masse totale des ingrédients,

ledit produit céréalier possédant un fort pouvoir anti-oxydant tel que mesuré par la méthode ORAC supérieur ou égal à 17, μmol équivalent de Trolox par gramme de produit fini (μmol TE/g), ledit pouvoir oxydant étant essentiellement apporté par la présence comme ingrédient d'au moins une fraction de céréale ou de pseudo-céréale.

Selon un mode de réalisation préféré, ledit pouvoir anti-oxydant tel que mesuré par la méthode ORAC des produits céréaliers selon l'invention est supérieur ou égal à 19, préférentiellement supérieur ou égal à 20, plus préférentiellement supérieur ou égal à 25 μmol TE/g.

Selon un mode de réalisation préféré, ledit produit céréalier contient au moins 4, préférentiellement au moins 5, plus préférentiellement au moins 5.5 Equivalent mg acide gallique de polyphénols totaux par gramme de produit céréalier délipidé (Eq. mg acide gallique /g).

Par le terme polyphénol, on entend selon l'invention toute molécule possédant plusieurs (i.e. au moins deux) fonctions phénol.

Avantageusement, ledit produit céréalier contient au moins un polyphénol choisi parmi les flavonoïdes, notamment la quercétine et la rutine, et les acides phénoliques, notamment les acides hydroxy-benzoïques, les acides hydroxy-cinnamiques, l'acide p-hydroxybenzoïque, l'acide vanillique, l'acide p-coumarique, l'acide sinapique, l'acide férulique et ses dérivés estérifiés comme le γ-oryzanol, ainsi que leurs mélanges, l'acide férulique étant préféré.

Selon également un mode de réalisation préféré selon l'invention, ledit produit céréalier contient :

- au moins 50, préférentiellement au moins 90, plus préférentiellement au moins 100 mg de magnésium pour 100 g de matière sèche de produit fini et/ou
- au moins 0.8, préférentiellement au moins 1.0, plus préférentiellement au moins 1.3 mg de zinc pour 100 g de matière sèche de produit fini et/ou
- au moins 1.0, préférentiellement au moins 1.5, plus préférentiellement au moins 2.0 μg de sélénium pour 100 g de matière sèche de produit fini.

Selon un mode de réalisation préféré selon l'invention, ledit produit céréalier contient :

- au moins 0.15, préférentiellement au moins 0.20, plus préférentiellement au moins 0.30 mg de vitamine B1 pour 100 g de produit fini et/ou
- au moins 40, préférentiellement au moins 45, plus préférentiellement au moins 50 μg de vitamine B9 pour 100 g de produit fini.

Conformément à l'invention, le produit céréalier présente l'avantage d'utiliser comme principale source de pouvoir anti-oxydant essentiellement au moins une fraction de céréale ou de pseudo-céréale. Or, une telle fraction peut avantageusement simplement s'intégrer comme ingrédient dans la composition dudit produit. Afin d'obtenir un pouvoir anti-oxydant élevé selon l'invention, il n'y généralement pas besoin d'utiliser des sources autres que les fractions de céréales, même si cela demeure possible. Ainsi, selon l'invention, il n'est pas strictement nécessaire de faire intervenir des sources 'exogènes' de molécules aux propriétés anti-oxydantes, comme par exemple de l'acide férulique pur. Selon l'invention, l'essentiel du pouvoir anti-oxydant est apporté par la présence d'au moins une fraction de céréale ou de pseudo-céréale naturellement riche en polyphénols.

Ladite céréale ou pseudo-céréale peut être n'importe quelle céréale connue de l'homme du métier, pourvu

6

qu'elle contribue de façon essentielle, par sa présence comme ingrédient, à conférer audit produit céréalier un pouvoir anti-oxydant mesuré par la méthode ORAC (Oxygen Radical Absorbance Capacity) supérieur ou égal à 17, de préférence supérieur ou égal à 19 μmol TE/g. Selon un mode de réalisation préféré, ladite céréale ou pseudo-céréale est choisie parmi le millet, le riz, le sarrasin, l'orge, le maïs, l'avoine, le blé, le sorgho, le maïs.

La fraction de céréale ou pseudo-céréale peut être n'importe quelle fraction connue de l'homme du métier, dans la mesure où son apport comme ingrédient confère de façon essentielle audit produit céréalier un pouvoir anti-oxydant mesuré par la méthode ORAC (Oxygen Radical Absorbance Capacity) supérieur ou égal à 17, de préférence supérieur ou égal à 19 μmol TE/g. Selon un mode de réalisation préféré, ladite fraction est choisie parmi la farine, le son, les remoulages et les germes, ainsi que leurs mélanges. De préférence, ladite fraction est choisie parmi le germe de blé, les remoulages de blé, notamment les remoulages blancs de blé, la farine de sarrasin, le son de riz, ainsi que leurs mélanges.

Avantageusement, conformément à l'invention, ladite fraction de céréale ou de pseudo-céréale contient :

- au moins 50, préférentiellement au moins 100, plus préférentiellement au moins 150 mg de magnésium pour 100 g de fraction et/ou
- au moins 1.0, préférentiellement au moins 2.0, plus préférentiellement au moins 4.0 mg de zinc pour 100 g de fraction et/ou
- au moins 3.0, préférentiellement au moins 4.0, plus préférentiellement au moins 5.0 μg de sélénium pour 100 g de fraction.

Avantageusement selon l'invention, ladite fraction de céréale ou de pseudo-céréale contient :

- au moins 0.5, préférentiellement au moins 1.0, plus préférentiellement au moins 1.5 mg de vitamine B1 pour 100 g de fraction et/ou
- au moins 0.5, préférentiellement au moins 1.0, plus préférentiellement au moins 1,5 mg de vitamine B6 pour 100 g de fraction et/ou
- au moins 40, préférentiellement au moins 50, plus préférentiellement au moins 60 μg de vitamine B9 pour 100 g de fraction et/ou
- au moins 2, préférentiellement au moins 4, plus préférentiellement au moins 6 mg de vitamine E pour 100 g de fraction.

De façon préférentielle, ladite fraction de céréale ou de pseudo-céréale a une teneur en polyphénols totaux supérieure ou égale à 5.0, préférentiellement supérieure ou égale à 6.0, plus préférentiellement supérieure ou égale à 8.0 Eq mg Acide Gallique/g de fraction céréalière.

De préférence, également selon l'invention, ladite fraction de céréale ou de pseudo-céréale présente un pouvoir anti-oxydant tel que mesuré selon la méthode ORAC supérieur ou égal à 30, de préférence supérieur ou égal à 40 μmol TE/g. De manière encore plus préférée, ladite fraction de céréale ou de pseudo-céréale présente un pouvoir anti-oxydant tel que mesuré selon la méthode ORAC supérieur ou égal à 50, de préférence 80 μmol TE/g.

Ledit produit céréalier selon l'invention est un produit de biscuiterie ou de panification sèche contenant de farine de blé. Par exemple, ledit produit céréalier est préférentiellement choisi parmi les biscuits, comme les biscuits secs, les biscuits salés, les biscuits de type 'apéritif, les biscuits sucrés, les biscuits à pâte dure ou semi-dure, les produits de pâtisserie, les gâteaux, les madeleines, les financiers, les boudoirs, les gaufrettes, les produits de type 'snack', les crackers, etc.

Selon un mode de réalisation particulièrement avantageux, lorsque de la farine blanche est présente comme ingrédient dans le type de produit céréalier visé par l'invention, une proportion de ladite farine blanche est substituée par au moins une fraction de céréale et/ou de pseudo-céréale, ce qui contribue, en tout ou partie, à conférer audit produit céréalier un pouvoir anti-oxydant mesuré par la méthode ORAC (Oxygen Radical Absorbance Capacity) supérieur ou égal à 17, de préférence supérieur ou égal à 19 μmol TE/g. Préférentiellement 10-50%, de préférence 15-45%, et plus préférentiellement encore 20-40% en masse de farine de blé conventionnellement présente sont substitués par au moins une fraction de céréale ou de pseudo-céréale, de manière à ce que ledit produit céréalier possède un pouvoir anti-oxydant mesuré par la méthode ORAC (Oxygen Radical Absorbance Capacity) supérieur ou égal à 17, de préférence supérieur ou égal à 19 μmol TE/g.

Selon la présente invention, 20-40% en masse de farine de blé sont substitués par :

- 15-25% de farine de sarrasin + 5-15% de son de riz, ou
- 15-25% de son de riz + 5-15% de farine de sarrasin, ou
- 15-25% de son de riz + 5-15% de remoulages blancs de blé, ou
- 5-15% de farine de sarrasin + 5-15% de son de riz + 5-15% de germes de blé.

De manière particulièrement préférée, 30% en masse de farine de blé sont substitués par :

- 20% de farine de sarrasin + 10% de son de riz, ou
- 20% de son de riz + 10% de farine de sarrasin, ou
- 20% de son de riz + 10% de remoulages blancs de blé, ou
- 10% de farine de sarrasin + 10% de son de riz + 10% de germes de blé.

Dans le cadre de l'invention, on utilise 10-25%, de préférence 12-22%, plus préférentiellement 15-20%, et encore plus préférentiellement 17-19% en masse par rapport à la masse totale des ingrédients, d'au moins une fraction de céréale ou pseudo-céréale selon l'invention.

En outre, le produit céréalier selon l'invention peut contenir des ingrédients ou additifs conventionnels. Par ces termes, on entend selon l'invention tout produit pouvant être utilisé conventionnellement dans la confection d'un produit céréalier. Ces ingrédients et additifs peuvent être, par exemple, notamment des sucres, des édulcorants, des fruits secs, des émulsifiants (lécithine de soja), des rehausseurs de goût, des arômes, des colorants, des poudres levantes (bicarbonate de sodium, bicarbonate d'ammonium, phosphate monocalcique, etc.), des matières grasses telles les huiles alimentaires (colza, amande, palme, etc.), les oeufs et produits dérivés, les produits laitiers (par exemple lait en poudre) et le sel de table. Préférentiellement, les matières grasses peuvent être sélectionnées de façon à ce que, dans les acides gras polyinsaturés, la proportion d'acides gras essentiels présente un rapport $\dfrac{\omega 6}{\omega 3} \leq 5$, que la teneur en acides gras trans soit au niveau de trace, et qu'elles soient exemptes de matières grasses hydrogénées. Pour cet objectif, le choix d'une huile de colza non hydrogénée est particulièrement indiquée. L'huile de colza est en effet connue pour rééquilibrer la diète occidentale actuelle comportant un rapport ω6/ω3 autour de 20 car son faible rapport (2 - 2.5) permet de se rapprocher des recommandations nutritionnelles actuelles (5). D'autre part, un bon apport en ω3 est reconnu pour avoir un rôle immunomodulateur et contribuer à la diminution des lésions d'athérosclérose en réduisant la réponse des plaquettes à l'agrégation La consommation d'huile de colza provoquerait également une baisse de la fibrillation ventriculaire suite à une ischémie.

Selon un mode de réalisation préféré, le produit céréalier selon l'invention peut en outre contenir au moins un fruit, notamment des baies, par exemple des fruits rouges des fruits secs (amandes, noisettes, noix, abricots secs, etc), du chocolat, ou un extrait de thé vert.

Selon un mode de réalisation, un ou plusieurs des ingrédients peuvent provenir de l'agriculture biologique, notamment les ingrédients d'origine céréalière.

Les produits céréaliers conformes à l'invention peuvent se présenter sous diverses formes connues de l'homme du métier. Les dimensions desdits produits peuvent être comprises entre 20-100mm, l'épaisseur étant généralement comprise entre 2-90mm. Lesdits produits peuvent par ailleurs comporter un revêtement et/ou un fourrage, des pépites de chocolat ou de fruit, un dorage et/ou un décor. Ils sont préférentiellement conditionnés sous emballage, par exemple dans des sachets contenant de 1 à 10 unités, par exemple représentant un pouvoir anti-oxydant voulu, et ayant une masse totale déterminée.

Grâce à la sélection et au respect des caractéristiques précitées, le produit céréalier selon l'invention possède un excellent niveau nutritionnel, des propriétés organoleptiques élevées, et permet d'augmenter l'apport en anti-oxydants naturels et/ou en vitamines B1, B9, et/ou en minéraux : zinc, magnésium et sélénium et/ou en fibres ; ainsi que de prévenir les effets délétères liés au stress oxydatif t du déclin des fonctions cognitive et immunitaire, en particulier chez le sujet humain, tout en évitant toute toxicité. Une consommation régulière des produits céréaliers selon l'invention contribue efficacement à augmenter la résistance de l'organisme face au stress oxydatif et ses effets nocifs, tout en garantissant une totale innocuité, dans la mesure où les ingrédients choisis sont complètement naturels et que le pouvoir anti-oxydant résulte essentiellement de fractions de céréale ou de pseudo-céréales, i.e. de fractions initialement destinées à la consommation dans le cadre de l'alimentation humaine. Ainsi, les produits céréaliers selon l'invention apportent des bénéfices sur le plan de la santé humaine, sans toutefois s'accompagner des risques éventuels liés à un surdosage.

Les produits céréaliers selon l'invention possèdent également de bonnes qualités organoleptiques : leur texture est agréable, et leur goût est au minimum acceptable.

Enfin, les produits céréaliers selon l'invention font preuve d'une excellente stabilité pendant plusieurs mois, ce qui est bien entendu un avantage essentiel sur le plan du stockage et de la distribution.

Selon un autre aspect, la présente invention concerne un procédé de fabrication d'un produit céréalier. Selon l'invention, ledit procédé comprend les étapes suivantes :

- sélection des ingrédients,
- mélange desdits ingrédients, en une ou plusieurs opérations, notamment dans un pétrin,

- façonnage dudit produit, notamment par moulage à la rotative, découpe au rotodécoupoir après laminage, agglomération, extrusion, co-extrusion, coulage de la pâte sur bandes pleines ou dans des moules de cuisson,
- facultativement cuisson et/ou facultativement refroidissement, et
- facultativement emballage,

lesdits ingrédients comprenant au moins une fraction de céréale et/ou au moins une fraction de pseudo-céréale. Un tel procédé permet d'obtenir les produits céréaliers selon l'invention. Les étapes de mélange, façonnage, cuisson et refroidissement, emballage sont parfaitement connues de l'homme du métier.

Une étape de cuisson n'est généralement pas requise dans le cas où ledit produit céréalier est de type « barre céréalière » ou une préparation à cuire par le consommateur.

Les technologies de façonnage ou formage, conventionnelles, conduisent notamment à des pâtes laminées, laminées feuilletées, et découpées, ou des pâtes rotatives ou coupe fil.

Des exemples de procédés utilisables selon l'invention sont les suivants :

1/ Procédé céréalier des pâtes sucrées : biscuits

Les matières premières majoritaires sont la farine, les matières sucrantes, les matières grasses. Elles sont mélangées à d'autres ingrédients tels l'eau, le sel, des poudres levantes,... dans un pétrin. Cette étape, généralement appelée pétrissage, résulte en la formation d'une pâte. La consistance de cette pâte détermine généralement son passage sur la ligne de fabrication.

Si cette pâte est liée (réseau assuré par les protéines), et forme un bloc de pâte, après un temps de repos variable, elle peut être façonnée par des cylindres de laminage de manière à faire un ruban de pâte, généralement de 1 à 2 mm d'épaisseur. Elle peut ensuite être découpée, par un cylindre roto découpoir, à la forme et aux dimensions des biscuits voulus. On obtient donc des pâtes dites laminées et découpées.

Si cette pâte est cohésive mais semble un peu moins liée, celle-ci peut être réduite à l'aide d'un émietteur, introduite ensuite dans une trémie, puis moulée aux formes et dimensions du biscuit voulu par compression de la pâte entre le cylindre cannelé et le cylindre de moulage. Le démoulage des biscuits s'effectue en général par pression du cylindre "mousse" sur le cylindre de moulage. Ce sont des pâtes dites rotatives.

Si cette pâte n'a pas de cohésion, si elle est collante, elle peut être dressée dans un coupe fil qui découpera des morceaux de pâte. Ce sont des pâtes dites coupe fil.

Ces pâtes peuvent être ensuite dorées, puis seront cuites dans un four. Sortis du four, les biscuits seront refroidis avant leur conditionnement.

2/ Procédé des pâtes neutres ou salées :

Les matières premières majoritaires sont la farine, l'eau, un ingrédient actif suivant les procédés (enzyme ou levure ou agent levant).

Ces ingrédients sont mélangés, en partie (cracker fermenté) ou en totalité. Ils sont mis à fermenter pendant un temps variable de 1 à 24 heures, à température ambiante, ou chaude suivant le procédé. La pâte est laminée, et éventuellement feuilletée puis découpée par un roto découpoir aux dimensions et formes du cracker souhaité. Les crackers sont ensuite cuits, et pulvérisés éventuellement de matière grasse et aromatisés, puis ensuite refroidis et conditionnés. Ce sont des pâtes dites laminées ou laminées feuilletées et découpées.

Avantageusement, la substitution d'une portion de la farine blanche par des fractions de céréale ou de pseudo-céréales selon l'invention ne nécessite pas de modification du procédé de fabrication par rapport à un biscuit à base de farine blanche seulement, et peut ainsi être adapté sur des lignes de fabrication usuelles.

Selon un mode de réalisation préféré, lesdits ingrédients comprennent au moins une fraction de céréale ou pseudo-céréale, de préférence choisie parmi le germe de blé, les remoulages blancs de blé, la farine de sarrasin, le son de riz et leurs mélanges.

Ledit produit céréalier selon l'invention est un produit de biscuiterie ou de panification sèche contenant de la farine de blé et 20-40% en masse de farine de blé sont substitués par :

- 15-25% de farine de sarrasin + 5-15% de son de riz, ou
- 15-25% de son de riz + 5-15% de farine de sarrasin, ou
- 15-25% de son de riz + 5-15% de remoulages blancs de blé, ou
- 5-15% de farine de sarrasin + 5-15% de son de riz + 5-15% de germes de blé.

De manière encore plus préférentielle, environ 30% en masse de farine de blé sont substitués par :

- 20% de farine de sarrasin + 10% de son de riz, ou
- 20% de son de riz + 10% de farine de sarrasin, ou
- 20% de son de riz + 10% de remoulages blancs de blé, ou
- 10% de farine de sarrasin + 10% de son de riz + 10% de germes de blé.

Enfin, dans un autre aspect, la présente invention concerne l'utilisation d'un produit céréalier tel que précédemment décrit, ou obtenu par le procédé divulgué dans la présente demande, dans le but d'augmenter l'apport en anti-oxydants naturels et/ou en vitamines B1, B9, et/ou en minéraux : zinc, magnésium et sélénium et/ou en fibres ; ainsi que de prévenir les effets délétères liés au stress oxydatif et du déclin des fonctions cognitive et immunitaire.

## EXEMPLES DE REALISATION

### EXEMPLE 1 : Méthodes de dosage des polyphénols

Echantillons

Les échantillons de fractions de céréales ont été stockés à -18°C avant l'analyse. Les maquettes, emballées, ont été mises en étuve à 20°C sous 50% d'hygrométrie pour ne pas subir de vieillissement accéléré.

Etalons

Les différents étalons d'acides phénoliques ont été obtenus chez Sigma-Aldrich, sous les références suivantes :

Acide gallique : Sigma G7384
+(-) Catéchine hydrate : Fluka 22120
Acide OH benzoique : Fluka 54630
Acide Vanillique : Sigma V2250
Acide p-Coumaric : Sigma C9008
Acide o-Coumaric : Fluka 28170
Acide férulique : Sigma F3500
Acide sinapique : Sigma : D7927
Rutine trihydrate : Fluka 84082
Quercétine dihydrate : Fluka F83370

Produits chimiques

L'ensemble des produits chimiques est de qualité analytique.

NaOH
HCl
Méthanol
Carbonate de sodium
Réactif de Folin-Ciocalteu : Fluka 47641

Préparation de l'échantillon

Avant toute opération, les fractions de céréales et les maquettes sont broyées et homogénéisées. Les maquettes ont été délipidées à l'aide d'hexane avant l'étape d'extraction.

Extraction des acides phénoliques

Les acides phénoliques ont été extraits selon 2 protocoles :

- Acides phénoliques totaux, permettant une extraction globale,
- Acides phénoliques en fonction de leur solubilité, permettant une extraction des acides phénoliques hydrosolubles, méthanolo-solubles, et insolubles.

Extraction des acides phénoliques totaux.

Hydrolyse selon le protocole suivant :

- Hydrolyse à l'aide de NaOH 2M, 1 nuit à 35°C (1g dans 20mL)
- Mise à pH 2 avec HCl 6M
- Centrifugation à 26895 g (15000 rpm) pendant 20 minutes
- Récupération du surnageant

Extractions des polyphénols solubles

Extractions séquentielles dans une étuve à l'abri de la lumière et sous agitation selon le protocole suivant :

- Extraction des hydrosolubles dans l'eau à 50°C (2g dans 20mL)
- Extraction des méthanolo-solubles dans méthanol/eau 80/20 à 70°C (culot dans 20mL)
- Hydrolyse de chacune des parties solubles obtenues à l'aide de NaOH comme pour l'hydrolyse des acides phénoliques totaux (5mL de partie dans 20mL de NaOH)

Extraction des polyphénols insolubles

Hydrolyse identique à celle des acides phénoliques totaux sur le culot résultant de l'extraction des polyphénols solubles. (culot + 30mL NaOH)

Quantification

La quantification a été effectuée selon 2 protocoles :

- Colorimétrie permettant une quantification globale des acides phénoliques
- HPLC permettant la quantification de chacun des acides phénoliques

Dosage par colorimétrie

La quantité de polyphénols est déterminée en suivant le protocole de Folin-Ciocalteu. La coloration bleue développée par l'oxydation des acides phénoliques avec le réactif de Folin-Ciocalteu (ou réactif de Folin) est mesurée à 760nm et la concentration a été calculée en utilisant une gamme étalon d'acide gallique à 40mg/100mL d'eau.

| Dans tubes à essai | Gamme étalon | | | | | | Echantillon | |
|---|---|---|---|---|---|---|---|---|
| Solution mère mL | 0 | 0.05 | 0.10 | 0.20 | 0.30 | 0.40 | / | / |
| Echantillon mL | / | / | / | / | / | / | 0.5 | 1 |
| Eau mL | 7.00 | 6.95 | 6.90 | 6.80 | 6.70 | 6.60 | 6.50 | 7.00 |
| Déclencher un chronomètre au moment de l'introduction du 1er mL de réactif Folin | | | | | | | | |
| Réactif de Folin mL dilué au ½ | 1.0 | 1.0 | 1.0 | 1.0 | 1.0 | 1.0 | 1.0 | 1.0 |
| A 3minutes introduire le 1er ajout de carbonate de sodium | | | | | | | | |
| Carbonate de sodium 20% mL | 2.0 | 2.0 | 2.0 | 2.0 | 2.0 | 2.0 | 2.0 | 2.0 |
| Boucher les tubes et les mélanger à l'aide d'un vortex (vortexer) | | | | | | | | |
| Développement de la coloration pendant 30 minutes | | | | | | | | |
| Lecture à 760nm contre le blanc | | | | | | | | |

Les résultats sont exprimés en équivalent mg acide gallique / g (Eq mg acide gallique/g) de produit mis en oeuvre.
La réponse différente des acides phénoliques (dépendant de leur composition) ainsi que la non-spécificité du réactif de Folin (interaction des protéines et sucres réducteurs) explique la différence observée entre les résultats des différentes extractions (la somme des fractions n'est pas toujours égale aux polyphénols totaux).

Dosage par chromatographie liquide en phase inverse et détection UV (HPLC -PDA)

Cette technique permet de quantifier les différents acides phénoliques présents.

Chacune des fractions obtenues a été préalablement filtrée sur colonne SPE (Extraction en Phase Solide) de type Oasis HLB 6cc (0,2g) Waters, permettant une purification de l'échantillon ainsi qu'une concentration des différents acides phénoliques.

Protocole d'utilisation des colonnes SPE :

- Conditionnement : 4mL méthanol puis 4mL eau
- Chargement avec 6mL d'extrait
- Lavage 1 avec 6mL d'une solution composée de 90mL d'acide formique à 2% et 10mL de méthanol
- Lavage 2 avec 2mL d'une solution composée de 70mL d'acide formique à 2% et 30mL de méthanol
- Elution avec 3 fois 2mL d'une solution composée de 10mL d'ammonium hydroxyde à 2% et 90mL de méthanol
- Evaporation sous vide à 60°C
- Reprise de l'extrait sec dans 1mL d'éluant A des conditions HPLC.

Les extraits solubilisés ont été filtrés sur Acrodisc GVWP 0,22 $\mu$m, puis injectés en HPLC-PDA.

Chromatographie HPLC-PAD :

Utilisation d'un système HPLC Alliance Waters 2695 XE associé à un détecteur à barrette de diodes PDA 996

Colonne : Hypersil ODS Agilent 5$\mu$m 200 x 2,1mm 799160D-572 (Interchim)
Précolonne : de même type.
Eluant A : 100mL méthanol + 10mL acide formique qsp 1L eau milliQ
Eluant B : 10mL acide formique qsp IL méthanol
Filtration des éluants sur membranes GVWP 0,22 $\mu$m

Conditions de gradient :

|  | Temps min | Débit mL/min | % Eluant A | % Eluant B |
|---|---|---|---|---|
| 1 | 0 | 0.30 | 95 | 5 |
| 2 | 1.30 | 0.30 | 95 | 5 |
| 3 | 2.70 | 0.30 | 80 | 20 |
| 4 | 18.70 | 0.30 | 80 | 20 |
| 5 | 32.00 | 0.30 | 50 | 50 |
| 6 | 45.00 | 0.30 | 30 | 70 |
| 7 | 47.00 | 0.30 | 0 | 100 |
| 8 | 67.00 | 0.30 | 0 | 100 |
| 9 | 72.00 | 0.30 | 95 | 5 |
| 10 | 77.00 | 0.30 | 95 | 5 |
| Température colonne : 25°C Température échantillon : 10°C Volume d'injection : 20$\mu$L | | | | |

La détection et l'identification des acides phénoliques sont effectuées par mesure de l'absorbance à 280nm et comparaison avec des spectres de référence obtenus à partir de solutions étalons.

La quantification (en mg / 100 g) par étalonnage externe à l'aide de solutions étalons permet de calculer les différents facteurs de réponse dans le domaine de concentration des échantillons.

La quantification des teneurs en minéraux, fibres et vitamines suivants a été réalisée selon les méthodes mentionnées ci-dessous :

Mg : Méthode CEE 73/46
Zn : Méthode CEE 78/633
Se : Méthode ETAAS
Fibres totales : Méthode AOAC 1997
Vit E : Méthode NF V18-402 - HPLC
Vit B1 et B6 : Méthode JORF 04/02/1999 - HPLC
Vit B9 totale : Méthode de Microbiologie.

**EXEMPLE 2 :** **Propriétés nutritionnelles des fractions de céréales et de pseudo-céréales selon l'invention**

Contenu en polyphénols des fractions selon l'invention

Comparées à la farine blanche de blé, les fractions de céréales selon l'invention possèdent des teneurs en polyphénols environ 3 à 5 fois plus élevées :

Contenu en molécules phénoliques des fractions

Comme le montre les tableaux ci-dessous, une analyse approfondie de la qualité des molécules phénoliques contenues dans les fractions de céréales selon l'invention a permis d'identifier les principaux polyphénols présents.

Ainsi, la catéchine est présente principalement dans le son de riz, l'acide vanillique dans le germe de blé (préférentiellement dans la partie insoluble), l'acide p-coumarique dans le son de riz, et l'acide férulique se retrouve principalement dans les fractions de blé (germe et remoulages) ainsi que dans le son de riz. Un tableau plus détaillé, avec les concentrations en molécules phénoliques dans l'extraction hydrosoluble et l'extraction non-soluble dans l'eau, est également présenté ci-dessous.

**Tableau 2**

| Teneur totale en polyphénols des fractions selon l'invention: | | |
|---|---|---|
| **Fraction** | **Capacité antioxydante totale Méthode ORAC ($\mu$mol TE/g)** | **Polyphénols Totaux (Eq.mg Acide gallique/g)** |
| Germe de blé | 106 | 11.15 |
| Remoulages blancs de blé | 49 | 9.35 |

(suite)

| Teneur totale en polyphénols des fractions selon l'invention: | | |
|---|---|---|
| Fraction | Capacité antioxydante totale Méthode ORAC (μmol TE/g) | Polyphénols Totaux (Eq.mg Acide gallique/g) |
| Farine de sarrasin | 81 | 8.48 |
| Son de riz | 121 | 15.24 |

**Tableau 3**

**Teneur en polyphénols des fractions selon l'invention (mg/100 g) :**

| Fractions | Catéchine | Ac. P-OH-benzoïque | Ac. Vanillique | Ac. P-coumarique | Ac. Sinapique | Ac. Férulique | Quercétine | Rutine | γ-oryzanol |
|---|---|---|---|---|---|---|---|---|---|
| Germe de blé | 0 | 1.26 | 13.73 | 0 | 0 | 81.57 | 0.174 | 3.94 | ND |
| Remoulages blancs | 0 | 1.04 | 1.32 | 0.74 | 0 | 86.89 | ND | ND | ND |
| Farine de sarrasin | 1.27 | 0.78 | 1.82 | 0.37 | 0.45 | 0.51 | 2.42 | 11.85 | ND |
| Son de riz | 5.37 | 0 | 1.93 | 20.19 | 4.73 | 80.94 | ND | ND | 4.03 |
| Farine blanche | 0.03 | 1.26 | 0 | 1.71 | 4.01 | 2.95 | ND | ND | ND |

ND = Non Déterminé

**Tableau 4**

**Teneur en polyphénols de la partie hydrosoluble des fractions selon l'invention (mg/100 g) :**

| Fraction | Partie hydrosoluble | | | | | | | |
|---|---|---|---|---|---|---|---|---|
| | Catéchine | Ac. P-OH-benzoïque | Ac. Vanillique | Ac. P-coumarique | Ac. Sinapique | Ac. Férulique | Quercétine | Rutine |
| Germe de blé | 0 | 0.27 | 0.541 | 0 | 0 | 25.97 | 0.174 | 3.94 |
| Remoulages blancs de blé | 0 | 1.039 | 0.86 | 0.056 | 0 | 23.83 | ND | ND |
| Farine de sarrasin | 1.082 | 0 | 1.815 | 0.205 | 0 | 0.423 | 2.42 | 11.85 |
| Son de riz | 2.037 | 0 | 1.934 | 1.281 | 4.729 | 11.749 | ND | ND |

**Tableau 5**

**Teneur en polyphénols de la partie insoluble des fractions selon l'invention (mg/100 g) :**

| Fraction | Partie insoluble | | | | | | | | |
|---|---|---|---|---|---|---|---|---|---|
| | Acide gallique | Catéchine | Ac. P-OH-benzoïque | Ac. Vanillique | Ac. P- coumarique | Ac. Sinapique | Ac. Férulique | Quercétine | Rutine |
| Germe de blé | 0 | 0 | 0.991 | 13.19 | 0 | 0 | 55.6 | ND | ND |
| Remoulages blancs de blé | 0 | 0 | 0 | 0.462 | 0.684 | 0 | 63.063 | ND | ND |
| Farine de sarrasin | 0.486 | 0.187 | 0.778 | 0 | 0.161 | 0.451 | 0.086 | ND | ND |
| Son de riz | 0 | 3.336 | 0 | 0 | 18.912 | 0 | 69.188 | ND | ND |

Il est important de noter que la farine blanche a en règle générale des concentrations trop basses en molécules phénoliques, ce qui confirme l'intérêt nutritionnel des fractions selon l'invention. Un mélange de fractions selon l'invention donne alors avantageusement un large éventail à la gamme de polyphénols lors de la fabrication des biscuits.

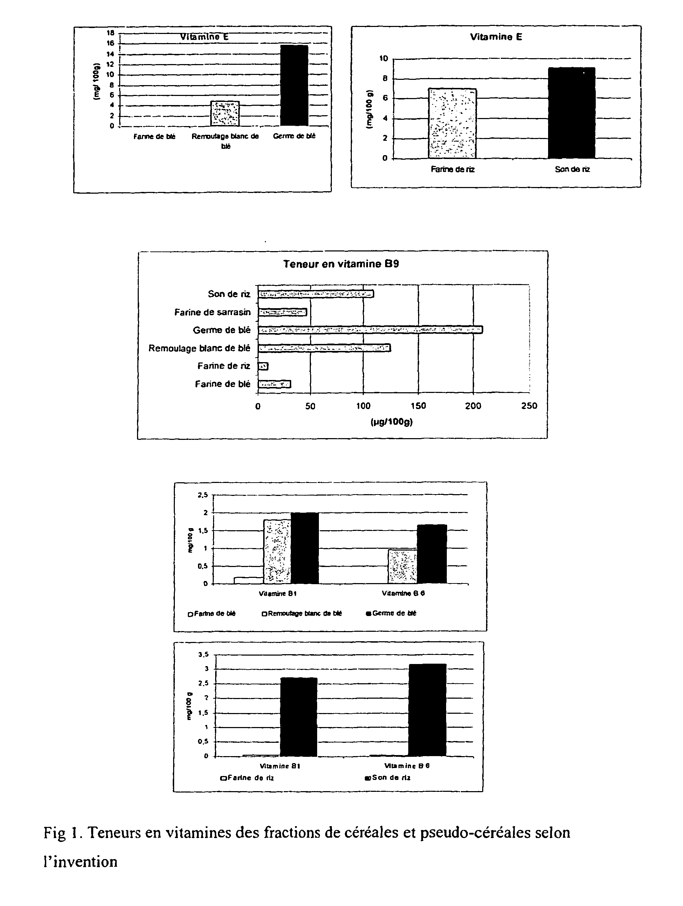

La **Fig 1** présente les teneurs en vitamines B1, B6, B9 et E des fractions de céréales utilisées conformément à l'invention.

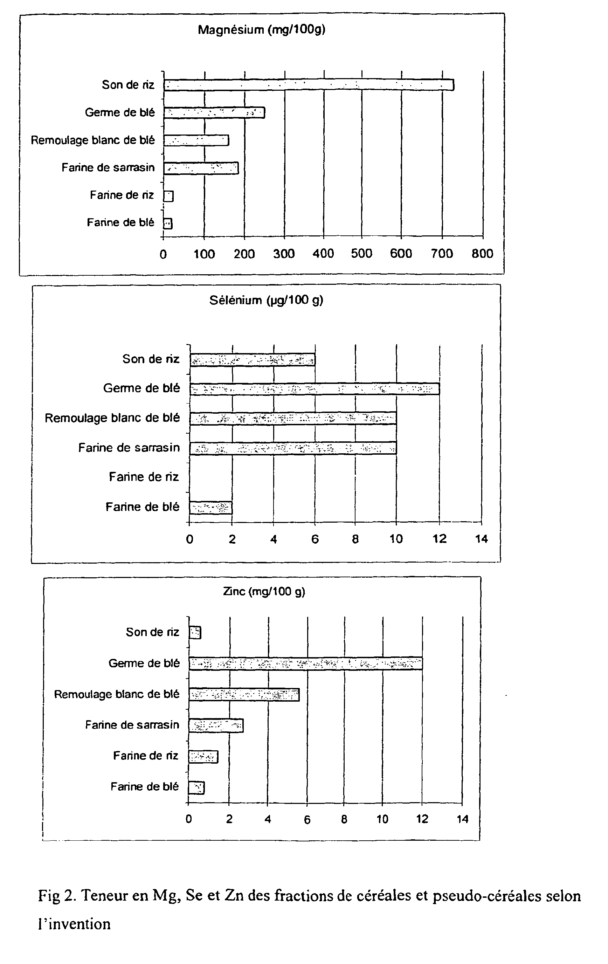

La **Fig 2** présente les teneurs en Mg, Se, Zn des fractions de céréales utilisées selon l'invention.

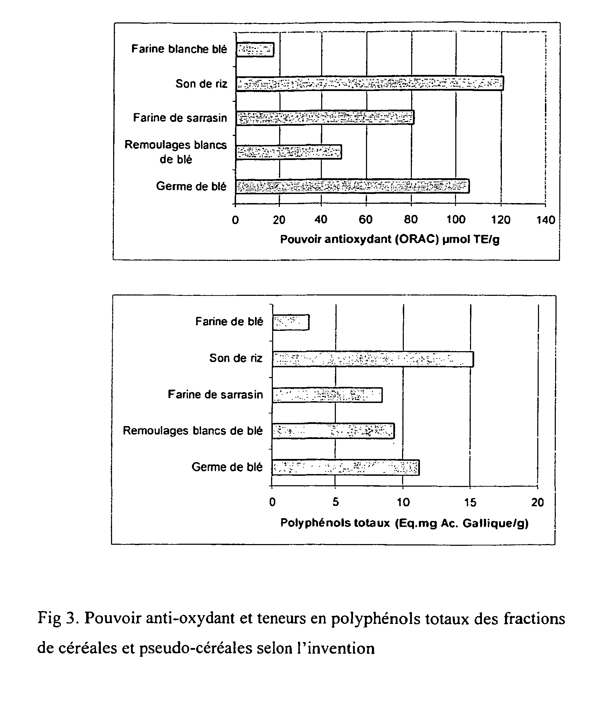

La **Fig 3** présente le pouvoir anti-oxydant ORAC et la teneur en polyphénols totaux des fractions de céréales utilisées selon l'invention.

**EXEMPLE 3 :** Mesure du pouvoir anti-oxydant des polyphénols purs selon la méthode ORAC

Tableau 6

| Pouvoir anti-oxydant de polyphénols selon la méthode ORAC ($\mu$mol TE/g): | |
|---|---|
| **Polyphénols** | **ORAC** |
| Acide férulique | 3.77 +/- 0.10 (3) |
| Quercétine | 4.38 +/- 0.22 (3) |
| Rutine | 4.28 +/- 0.25 (3) |
| Oryzanol | 3+/- 0.26 (2) |
| Source : (1) 208/id; (2) 40/id; (3) 1602/id<br>ORAC = Oxygen Radical Absorbance Capacity | |

**EXEMPLE 4 :** Pouvoir anti-oxydant des fractions de céréales selon l'invention

Le contenu important de molécules phénoliques présentes dans les fractions leur confère également un pouvoir anti-oxydant (ORAC) bien plus important que celui de la farine blanche.

Cette capacité anti-oxydante des fractions est bien corrélée avec leurs teneurs en polyphénols totaux.

**EXEMPLE 5 : Préparation de produits de biscuiterie selon l'invention**

**Choix des ingrédients**

**Tableau 7**

| Description de mélanges des fractions et codes produits : | |
|---|---|
| Code produit | Description du contenu des fractions (% de fractions en substitution de la farine blanche) |
| OC 38 / CO 48 | standard Laminé Découpé 5 (OC) ou Rotative (CO) |
| OC 39 / CO 49 | 20 % de farine de sarrasin + 10% de son de riz |
| OC 40 / CO 50 | 20% de son de riz + 10% de farine de sarrasin |
| OC 41 / CO 51 | 20 % de farine de sarrasin + 10% de remoulages blancs de blé |
| OC 42 / CO 52 | 20% de son de riz + 10% de remoulages blancs de blé |
| OC 43 / CO 53 | 10 % de farine de sarrasin + 10 % de sons de riz + 10 % de germes de blé |

**Elaboration des biscuits, densité, dimensions**

L'invention va être illustrée par des exemples sur des pâtes sucrées de produits céréaliers où sont mélangées, conformément à l'invention, avec de la farine de blé standard des fractions de céréales. Les résultats technologiques obtenus sur les tests de laboratoire, selon la technologie Laminé-Découpé ou la technologie Rotative, de fabrication de biscuits sont alors comparés avec les résultats obtenus avec la farine dite "standard" (farine de blé standard).

Dans tous les cas, la substitution partielle de la farine de blé tendre par l'une des fractions ou un mélange de certaines de ces fractions permet avantageusement selon l'invention la fabrication de biscuits sans modification des autres ingrédients de la recette et/ou du procédé de fabrication.

Protocole de préparation pour la technologie laminée découpée :

L'ensemble des farines et fractions de céréales est mélangé dans le pétrin. Puis sont ajoutés les différents sucres, la matière grasse. Le tout est pétri quelques instants, puis sont ajoutés les poudres levantes et l'eau. L'ensemble est pétri de 4 à 12 minutes. Après repos, la pâte est laminée et découpée aux formes et dimensions des biscuits. Les pâtons sont ensuite cuits dans un four à une température entre 250 et 300°C à perte en eau constante pour obtenir des biscuits de 1 à 3% d'humidité.

Protocole de préparation pour la technologie rotative :

L'ensemble des sucres, matière grasse, et poudres levantes est mélangé dans le pétrin lors de ce que l'on peut appeler le crémage. Puis sont ajoutées les différentes farines et fractions de céréales. L'ensemble est pétri de 4 à 12 minutes. Après repos, la pâte est moulée et déposée aux formes et dimensions des biscuits. Les pâtons sont ensuite cuits dans un four à une température entre 250 et 300°C à perte en eau constante pour obtenir des biscuits de 1 à 3% d'humidité.

Technologie Laminée-Découpée :

Les compositions suivantes sont des exemples de biscuits sucrés fabriqués selon l'invention en utilisant la technologie Laminée-Découpée.

**Tableau 8**

| Recettes de biscuits selon l'invention pour la technologie Laminée Découpée: | | | | | | |
|---|---|---|---|---|---|---|
| Ingrédients (g) | OC 38 | OC 39 | OC 40 | OC 41 | OC 42 | OC 43 |
| Farine de blé | 288 ,54 | 198,56 | 197,28 | 199,67 | 197,10 | 197,03 |
| Farine de sarrasin | 0 | 56,73 | 28,18 | 57,05 | 0 | 28,15 |

(suite)

| Recettes de biscuits selon l'invention pour la technologie Laminée Découpée: | | | | | | |
|---|---|---|---|---|---|---|
| Ingrédients (g) | OC 38 | OC 39 | OC 40 | OC 41 | OC 42 | OC 43 |
| Sons de riz | 0 | 28,37 | 56,37 | 0 | 56,31 | 28,15 |
| Remoulages blancs | 0 | 0 | 0 | 28,52 | 28,16 | 0 |
| Germes de blé stabilisés | 0 | 0 | 0 | 0 | 0 | 28,15 |
| Sucre glace | 34,44 | 34,44 | 34,44 | 34,44 | 34,44 | 34,44 |
| Sucre inverti | 22,51 | 22,51 | 22,51 | 22,51 | 22,51 | 22,51 |
| Sirop de glucose | 82,36 | 82,36 | 82,36 | 82,36 | 82,36 | 82,36 |
| Coprah | 47,41 | 47,41 | 47,41 | 47,41 | 47,41 | 47,41 |
| Bicarbonate de sodium | 1,81 | 1,81 | 1,81 | 1,81 | 1,81 | 1,81 |
| Acide citrique | 0,39 | 0,39 | 0,39 | 0,39 | 0,39 | 0,39 |
| Pyrophosphate de sodium | 0,51 | 0,51 | 0,51 | 0,51 | 0,51 | 0,51 |
| Bicarbonate d'ammonium | 4,04 | 4,04 | 4,04 | 4,04 | 4,04 | 4,04 |
| Eau | 17,98 | 22,86 | 24,69 | 21,27 | 24,95 | 25,04 |
| TOTAL (g) | 499,99 | 499,99 | 499,99 | 499,99 | 499,99 | 499,99 |

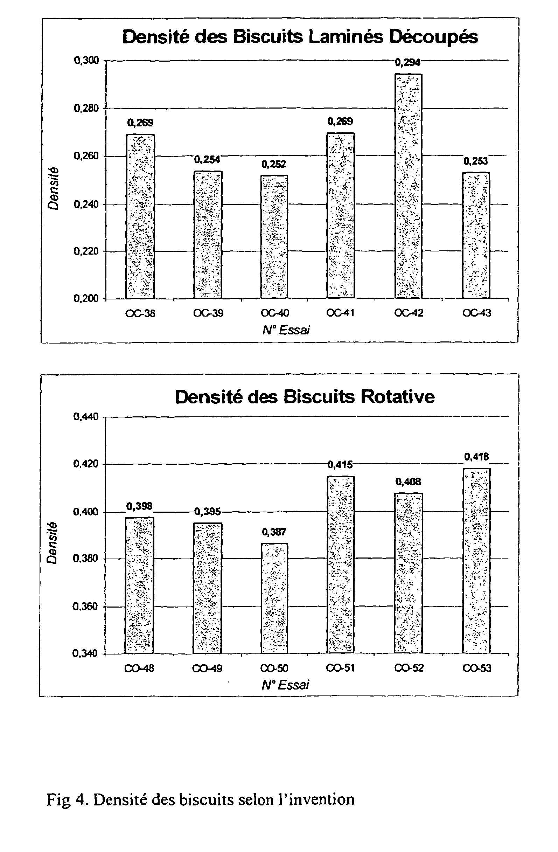

Les dimensions des biscuits ne montrent pas de différences significatives avec le standard. Les densités mesurées pour les produits de biscuiterie selon l'invention ne sont pas significativement différentes de celles du test standard (Essai OC 38), comme le montrent les résultats sur la figure 4, partie haute.

Technologie Rotative :

Les compositions suivantes sont des exemples de biscuits sucrés fabriqués selon l'invention en utilisant la technologie "Rotative".

**Tableau 9**

| Recettes de biscuits selon l'invention pour la technologie Rotative: | | | | | | |
|---|---|---|---|---|---|---|
| Ingrédients (g) | CO 48 | CO 49 | CO 50 | CO 51 | CO 52 | CO 53 |
| Farine de blé | 738,70 | 508,39 | 505,11 | 511,23 | 504,47 | 504,36 |
| Farine de sarrasin | 0 | 145,25 | 72,16 | 146,06 | 0 | 72,05 |
| Sons de riz | 0 | 72,63 | 144,32 | 0 | 144,13 | 72,05 |
| Remoulages blancs | 0 | 0 | 0 | 73,03 | 72,07 | 0 |
| Germes de blé stabilisés | 0 | 0 | 0 | 0 | 0 | 72,05 |
| Sucre glace | 171,00 | 171,00 | 171,00 | 171,00 | 171,00 | 171,00 |
| Sirop de glucose | 27,00 | 27,00 | 27,00 | 27,00 | 27,00 | 27,00 |
| Coprah | 162,00 | 162,00 | 162,00 | 162,00 | 162,00 | 162,00 |
| Bicarbonate de sodium | 3,06 | 3,06 | 3,06 | 3,06 | 3,06 | 3,06 |
| Bicarbonate d'ammonium | 4,5 | 4,5 | 4,5 | 4,5 | 4,5 | 4,5 |
| Sel | 3,6 | 3,6 | 3,6 | 3,6 | 3,6 | 3,6 |
| Lécithine | 1,17 | 1,17 | 1,17 | 1,17 | 1,17 | 1,17 |
| Eau | 89,1 | 101,5 | 106,2 | 97,5 | 107,1 | 107,3 |
| TOTAL (g) | 1200,13 | 1200,10 | 1200,12 | 1200,15 | 1200,10 | 1200,14 |

Les dimensions des biscuits ne montrent pas de différences significatives avec le standard. Les densités mesurées ne sont pas significativement différentes de celles du test standard (Essai CO-48), comme le montrent les résultats sur la figure 4, partie basse.

**Pouvoir anti-oxydant des produits de biscuiterie selon l'invention**

La capacité anti-oxydante des biscuits selon l'invention montre des valeurs sensiblement plus élevées que pour le biscuit standard.

Il existe une bonne corrélation entre la capacité anti-oxydante et la teneur en polyphénols totaux.

Le contenu en polyphénols, vitamines et minéraux des biscuits contenant les fractions sélectionnées est plus élevé que dans le biscuit standard (farine blanche) (voir tableau 10).

**Tableau 10**

| Pouvoir anti-oxydant ORAC et teneurs en polyphénols totaux, vitamines et minéraux des biscuits selon l'invention élaborés selon deux types de technologie | | | | Vitamines | | Minéraux | | |
|---|---|---|---|---|---|---|---|---|
| | | ORAC totale | Polyphénols totaux | B1 | B9 | Zn | Mg | Se |
| **Technologie Laminée** | | | | | | | | |
| OC 38 | standard laminé découpé | 18 | 3,34 | 0,06 | 25 | 0,3 | 15 | 1,29 |
| OC 39 | 20 % farine de sarrasin + 10% son de riz | 26 | 5,09 | 0,19 | 35 | 0,8 | 91 | 2,03 |

(suite)

| Pouvoir anti-oxydant ORAC et teneurs en polyphénols totaux, vitamines et minéraux des biscuits selon l'invention élaborés selon deux types de technologie | | | | | | | | |
|---|---|---|---|---|---|---|---|---|
| | | ORAC totale | Polyphénols totaux | Vitamines | | Minéraux | | |
| | | | | B1 | B9 | Zn | Mg | Se |
| **Technologie Laminée** | | | | | | | | |
| OC 40 | 20% son de riz + 10% sarrasin | 20 | 5,2 | 0,28 | 61 | 1,1 | 130 | 1,45 |
| OC 41 | 20 % farine de sarrasin + 10% remoulages blancs de blé | 16 | 4,31 | 0,16 | 42 | 0,8 | 46 | 2,3 |
| OC 42 | 20% son de riz + 10% remoulages blancs de blé | 20 | 5,01 | 0.33 | 54 | 1,3 | 125 | 1,13 |
| OC 43 | 10 % farine de sarrasin + 10%sonde riz+ 10% germes de blé stabilisés | 31 | 5,51 | 0,22 | 53 | 1,9 | 91 | 1,46 |
| **Technologie Rotative** | | | | | | | | |
| CO 48 | standard (rotative) | 10 | 2,96 | 0,06 | 35 | 0,5 | 15 | 1,45 |
| CO 49 | 20 % farine de sarrasin + 10% son de riz | 17 | 5,1 | 0,22 | 39 | 1 | 91 | 2,28 |
| CO 50 | 20% son de riz + 10% sarrasin | 20 | 5,54 | 0,32 | 46 | 1,3 | 130 | 1,63 |
| CO 51 | 20 % farine de sarrasin + 10% remoulages blancs de blé | 18 | 4,62 | 0,17 | 41 | 1 | 47 | 2,58 |
| CO 52 | 20% son de riz + 10% remoulages blancs de blé | 19 | 5,33 | 0,37 | 43 | 1,5 | 127 | 1,27 |
| CO 53 | 10 % farine de sarrasin + 10 % son de riz + 10 % Germes de blé stabilisés | 19 | 5,07 | 0,29 | 51 | 1,9 | 93 | 1,63 |
| Unités : <br> ORAC totale ($\mu$mol TE/g) <br> Polyphénols totaux (UMA) Eq. mg Ac. Gallique/g <br> Vitamine B1 (mg/100g), Vitamine B9 ($\mu$g/100g) <br> Zn (mg/100g), Mg (mg/100g), Se ($\mu$g/100g) | | | | | | | | |

**Tableau 11 Teneur en fibres des biscuits selon l'invention**

| | | Teneur en fibres (g/100g) |
|---|---|---|
| **Technologie laminée** | | |
| OC 38 | standard laminé découpé | 3.4 |
| OC 39 | 20 % farine de sarrasin + 10% son de riz | 4 |
| OC 40 | 20% son de riz + 10% sarrasin | 5.3 |
| OC 41 | 20 % farine de sarrasin + 10% remoulages blancs de blé | 3.9 |
| OC 42 | 20% son de riz + 10% remoulages blancs de blé | 6.7 |
| OC 43 | 10 % farine de sarrasin + 10 % son de riz + 10% germes de blé stabilisés | 4.7 |

(suite)

| Technologie rotative | | |
|---|---|---|
| CO 48 | standard (rotative) | 2.6 |
| CO 49 | 20 % farine de sarrasin + 10% son de riz | 4.4 |
| CO 50 | 20% son de riz + 10% sarrasin | 5.6 |
| CO 51 | 20 % farine de sarrasin + 10% remoulages blancs de blé | 3.5 |
| CO 52 | 20% son de riz + 10% remoulages blancs de blé | 6.1 |
| CO 53 | 10 % farine de sarrasin + 10 % son de riz + 10 % Germes de blé stabilisés | 3.8 |

## Tableau 12

## Teneurs en polyphénols de biscuits selon l'invention élaborés selon deux types de technologies

| | | Profil polyphénols totaux en mg/100g | | | | | | | |
|---|---|---|---|---|---|---|---|---|---|
| | | Catéchine | Ac. P-OH-benzoïque | Ac. Vanillique | Ac. P-coumarique | Ac. Sinapique | Ac. Férulique | Rutine | Oryzanol |
| technologie laminée | | | | | | | | | |
| OC 39 | 20 % farine de sarrasin + 10% son de riz | 2,10 | 3,60 | 3,50 | 1,90 | 4,30 | 8,20 | 2,31 | ND |
| OC 40 | 20% son de riz + 10% farine de sarrasin | 3,38 | 5,60 | 0,00 | 3,34 | 7,32 | 13,12 | 1,04 | ND |
| OC 42 | 20% son de riz + 10% remoulages blancs de blé | 2,80 | 7,70 | 3,70 | 3,60 | 10,70 | 17,00 | ND | 40,17 |
| OC 43 | 10 % farine de sarrasin + 10 % sons de riz + 10 % Germes de blé stabilisés | 5,66 | 0,00 | 0,00 | 2,03 | 12,83 | 9,45 | 1,35 | 19,04 |
| technologie rotative | | | | | | | | | |
| CO 49 | 20 % farine de sarrasin + 10% son de riz | 0,60 | 2,30 | 3,60 | 1,70 | 4,80 | 8,40 | 0,47 | 0,24 |
| CO 50 | 20% son de riz + 10% farine de sarrasin | 0,00 | 0,00 | 0,00 | 3,10 | 14,10 | 10,10 | 0,24 | 0,48 |
| CO 52 | 20% son de riz + 10% remoulages blancs de blé | 0,60 | 3,00 | 1,00 | 3,20 | 13,90 | 16,10 | ND | 0,48 |
| CO 53 | 10 % farine de sarrasin + 10 % sons de riz + 10 % Germes de blé stabilisés | 0,00 | 0,00 | 0,40 | 1,50 | 12,60 | 10,00 | 0,95 | 0,24 |

**EXEMPLE 6** : Effet d'une supplémentation avec du germe de blé et de la farine de sarrasin sur des paramètres de la fonction immunitaire, du système anti-oxydant et du stress oxydatif chez la souris jeune prématurément vieillie

Le vieillissement est considéré comme un processus progressif et irréversible avec accumulation de changements fonctionnels pouvant augmenter le risque d'incidence de maladies et de mort.

Plus de 300 théories ont été proposées pour expliquer le processus de vieillissement et malgré le fait qu'aucune d'entre elles ne soit complètement consensuelle à l'heure actuelle, la théorie dénommée « des radicaux libres » ou espèces réactives de l'oxygène (ROS = Reactive Oxygen species) proposée par Harman (Harman D. Free radical theory of aging. Triangle; 1973;12:153-8.) reste encore la plus acceptée. D'après cette théorie, les radicaux libres et ses dérivés sont responsables des dommages cellulaires via l'oxydation des molécules structurelles de la cellule (lipides, protéines, acides nucléiques) avec comme conséquence des altérations fonctionnelles.

Le vieillissement s'accompagne d'un déséquilibre entre la production de ROS et le niveau d'antioxydants en faveur des radicaux, une situation connue sous le nom de stress oxydatif (Floyd RA, Hensley K. Oxidative stress in brain aging. Implications for therapeutics of neurodegenerative diseases. Neurobiology of aging 2002;23:795-807. Sohal RS, Mockett RJ, Orr WC. Mechanisms of aging: an appraisal of the oxidative stress hypothesis. Free radical biology & medicine 2002;33:575-86.)

Certaines cellules sont plus au moins sensibles au stress oxydatif. Les cellules immunitaires, par exemple, sont très vulnérables à un déséquilibre de la balance antioxydants/oxydants, car seul un niveau adéquat d'antioxydants permet à la cellule immunitaire d'être dans un milieu réducteur, protégée contre le stress oxydatif et ainsi de conserver toute sa fonctionnalité.

La relation entre fonction immunitaire et antioxydants devient de plus en plus évidente et des travaux récents montrent qu'une supplémentation en antioxydants peut avoir un effet bénéfique dans certaines conditions (Grimble RF. Nutritional modulation of immune function. The Proceedings of the Nutrition Society 2001;60:389-97. Meydani SN, Beharka AA. Vitamin E and immune response in the aged. Bibliotheca nutritio et dieta 2001;148-58. Moriguchi S, Muraga M. Vitamin E and immunity. Vitamins and hormones; 2000;59,305-36. Meydani M. Dietary antioxidants modulation of aging and immune-endothelial cell interaction. Mechanisms of ageing and development 1999;111:123-32. Beck MA. Selenium and host defence towards viruses. The Proceedings of the Nutrition Society 1999;58:707-11. Hughes DA. Effects of dietary antioxidants on the immune function of middle-aged adults. The Proceedings of the Nutrition Society 1999;58:79-84. de la FM, Ferràndez MD, Burgos MS, Soler A, Prieto A, Miquel- J. Immune function in aged women is improved by ingestion of vitamins C and E. Canadian journal of physiology and pharmacology 1998;76:373-80.)

Par ailleurs, des données scientifiques confirment que le vieillissement est associé, d'une part à un stress oxydatif plus important, et d'autre part à un déclin de divers fonctions physiologiques, plus particulièrement à une perte d'homéostasie de la fonction immunitaire, ce qui est corrélé à une plus importante incidence de maladies infectieuses et de certains cancers chez les sujets âgés (Burns EA, Leventhal EA. Aging, immunity, and cancer. Cancer control 2000;7:513-22.).

Les principales modifications de la fonction immunitaire identifiées au cours du vieillissement sont résumées dans le tableau ci-dessous :

**Tableau 13**

| Principaux effets du vieillissement sur la fonction immunitaire | | |
|---|---|---|
| **Cellules** | **Fonction** | **Modification** |
| Phagocytes | Adhérence | Augmentation |
| | Migration | Diminution |
| | Phagocytose | Diminution |
| | Production des espèces réactives de l'oxygène (ROS) | Augmentation |
| | Production de TNF-$\alpha$ | Augmentation |
| | Production de IL-1 | Augmentation |
| Lymphocytes | Adhérence | Augmentation |
| | Migration | Diminution |
| | Prolifération | Diminution |
| | Production de IL-2 | Diminution |
| cellules NK | Cytotoxicité | Diminution |

Les cellules immunitaires, plus particulièrement les phagocytes, exercent leur cytotoxicité via la production des espèces réactives de l'oxygène. Cependant, une quantité excessive de ROS qui n'arrive pas à être contrecarrée par le système antioxydant entraîne l'installation d'un stress oxydatif qui peut être délétère, car les ROS attaquent les composants de la cellule en entraînant sa mort. Un bon fonctionnement du système antioxydant est donc vital pour les cellules immunitaires.

L'effet de deux fractions de céréales naturellement riches en nutriments et en polyphénols a été évalué pendant 5 puis 15 semaines (exemple 7), sur plusieurs paramètres de la fonction immunitaire, de production de ROS, et du stress oxydatif des leucocytes, chez un modèle de souris jeune prématurément vieillie (Viveros MP, Fernàndez B, Guayerbas N, de la FM. Behavioral characterization of a mouse model of premature immunosenescence. Journal of neuroimmunology 2001;114:80-8. de la FM, Miñano M, Manuel V, V et al. Relation between exploratory activity and immune function in aged mice: a preliminary study. Mechanisms of ageing and development 1998;102:263-77.).

L'évaluation de l'effet du germe de blé (fraction B) et de la farine de sarrasin (fraction C) sur des paramètres de la fonction immunitaire, de la production de ROS et du stress oxydatif chez un modèle de souris jeune prématurément vieillie a donc été réalisée comme suit.

**Animaux :**

90 souris femelles OF1 Swiss (Mus musculus) (Harlan Ibérica Spain) âgées de 3 mois ont été présélectionnées pour cette étude. Chaque souris a été marquée à l'arrivée au laboratoire pour être suivie tout au long de l'étude. Les souris ont été placées dans des cages en polyuréthanne à une température constante de $22 \pm 2$ °C et avec un cycle inverse lumière/obscurité de 12/12 heures. Tous les animaux ont été traités en accord avec les directives 86/6091 EEC de la Communauté Européenne.

**Groupes expérimentaux :**

Les souris ont été classées dans un premier temps en groupes, en fonction de leur performance lors de 4 évaluations au test T-shape maze (de la FM, Minano M, Manuel V, V et al. Relation between exploratory activity and immune function in aged mice: a preliminary study. Mechanisms of ageing and development 1998;102:263-77). Ainsi 44 souris ont été classées comme des souris lentes (performance de plus de 10 secondes), 30 souris ont été classées comme rapides (performance de moins de 10 secondes) et les autres n'ont pas été inclues dans cette étude car elles n'ont pas répondu de manière homogène aux 4 évaluations. D'après ce modèle, les souris appelées lentes correspondent à des souris prématurément vieillies (PAM - Prematurely-Aging Mice) et les rapides à des non-prématurément vieillies (NPAM - Non Prematurely-Aging Mice). Ainsi 44 souris PAM et 30 souris NPAM ont été subdivisées en 3 groupes pour une supplémentation comme suit :

**Tableau 14**

| Groupes de souris pour l'expérimentation | | |
|---|---|---|
| 30 NPAM (Non Prematurely-Aging Mice) | 30 Souris Contrôles (témoins) | NPAMc |
| 44 PAM (Prematurely-Aging Mice) | 12 Souris Contrôles | PAMc |
| | 16 Souris supplémentées avec un régime contenant 20 % de germe de blé (Fraction B) | PAM-B |
| | 16 Souris supplémentées avec un régime contenant 20 % de farine de sarrasin (Fraction C) | PAM-C |

**Echantillons biologiques et marqueurs :**

Des échantillons de leucocytes du péritoine ont été obtenus, à 5 semaines dès le début de la supplémentation, sans sacrifier les animaux, d'après la technique décrite par De la Fuente et al. (de la FM, Miñano M, Manuel V, V et al. Relation between exploratory activity and immune function in aged mice: a preliminary study. Mechanisms of ageing and development 1998;102:263-77). Les marqueurs utilisés pour évaluer la fonction immunitaire sont les suivants :

➢ Adhérence, chimiotaxie, phagocytose et production de ROS intracellulaire (production d'anion superoxyde O2°) de macrophages : méthode d'après De la Fuente et al de la FM, Del Rio M, Ferrandez MD, Hernanz A. Modulation of phagocytic function in murine peritoneal macrophages by bombesin, gastrin-releasing peptide and neuromedin C. Immunology 1991;205-11.)

➢ Adhérence et prolifération de lymphocytes : méthode décrite par Del Rio et al. (Del Rio M, Hemanz A, de la FM. Bombesin, gastrin-releasing peptide, and neuromedin C modulate murine lymphocyte prolifération through adherent accessory cells and activate protein kinase C. Peptides 1994;15:15-22.)

➢ Adhérence, chimiotaxie, prolifération de lymphocytes et production d'IL-2 : méthode décrite par Del Rio et al. (Del Rio M, Hernanz A, de la FM. Bombesin, gastrin-releasing peptide, and neuromedin C modulate murine lymphocyte proliferation through adherent accessory cells and activate protein kinase C. Peptides 1994;15:15-22.) et Guayerbas et al. (Guayerbas N, Puerto M, Victor VM, Miquel J, de la FM. Leukocyte function and life span in a murine model of premature immunosenescence. Experimental gerontology 2002;37:249-56).

➢ Cytotoxicité des cellules 'Natural Killer' (NK) : méthode décrite par Ferrandez et al. (Ferrandez MD, de la FM. Effects of age, sex and physical exercise on the phagocytic process of murine peritoneal macrophages. Acta physiologica Scandinavica 1999;166:47-53.)

Les marqueurs pour évaluer la production des espèces réactives de l'oxygène (ROS) sont :

➢ Production d'anion superoxyde ($O_2°$) : méthode décrite dans Victor et al. (Victor VM, Guayerbas N, Garrote D, Del Rio M, de la FM. Modulation of murine macrophage function by N-acetylcysteine in a model of endotoxic shock. BioFactors 1999;10:347-57.).
➢ Production de cytokines par les leucocytes TNF-$\alpha$ (Victor VM, de la FM. Changes in the superoxide production and other macrophage functions could be related to the mortality of mice with endotoxin-induced oxidative stress. Physiological research 2003;52:101-10.).
➢ Production de peroxyde d'hydrogène (H2O2), de prostaglandine PGE2 et d'oxyde nitrique (NO) (Molina HF, Hernanz A, de la FM, Guaza C. N-Acetylcysteine inhibition of encephalomyelitis Theiler's virus- induced nitric oxide and tumour necrosis factor-alpha production by murine astrocyte cultures. BioFactors 1999;187-93. Connelly L., Jacobs A. T., Palacios-Callender M., Moncada S., Hobbs A. Macrophage endothelial nitric oxide synthase auto-regulates cellular activation and pro-inflammatory protein expression. J. Biol. Chem. 2003).

L'activité des enzymes anti-oxydantes a également été évaluée : superoxyde dismutase (SOD), Glutathion peroxydase (GPX) et Catalase (CAT), ainsi que le système glutathion d'après la description dans Victor et al. (Victor VM, de la FM. Changes in the superoxide production and other macrophage functions could be related to the mortality of mice with endotoxin-induced oxidative stress. Physiological research 2003;52:101-10.)

Afin de déterminer les dommages oxydatifs sur les lipides, a également été mesurée la teneur en malondialdéhyde (MDA), d'après la technique décrite par Chirico et al. (Chirico S., Smith C., Marchant C., Mithison M. J., Halliwell B. Lipid peroxidation in hyperlipemic patients. A study of plasma using an HPLC-based thiobarbituric acid test. Free. Radic Res. 1993 ; 19: 51-57).

**Analyse statistique**

Toutes les valeurs sont exprimées en moyenne ± écart type (moyenne). Les tests de Kolmogorov-Smimov et Levene ont été utilisés pour déterminer la normalité des données et l'homogénéité des variances. Les analyses entre groupes supplémentés et groupes contrôles ont été réalisés par t-Student et ANOVA. Les comparaisons deux à deux ont été réalisées par le test de Tukey. La significativité statistique a été testée en bilatéral et elle est exprimée en : ¤ $p<0,05$, ¤¤ $p<0,01$ et ¤¤¤ $p<0,001$ pour les différences entre les groupes contrôles des NPAM et PAM et en * $p<0,05$, **$p<0,01$ et *** $p<0,001$ pour les différences entre groupes supplémentés et leurs correspondants contrôles PAM par niveau d'âge.

**Résultats**

L'information présentée dans les tableaux suivants correspond uniquement aux modifications statistiquement significatives de différents marqueurs après la supplémentation.

A. Effet des fractions sur la fonction immunitaire des souris jeunes prématurément vieillies

Un certain nombre de paramètres modifiés au cours du vieillissement chez des souris jeunes sont restaurés après supplémentation avec les fractions. (Voir tableaux ci-dessous).

Légende des tableaux

NS Non significatif
∨ Augmentation du paramètre après supplémentation avec le régime selon l'invention
¬ Paramètre qui diminue au cours de l'âge

**Tableau 15**

| Effet d'une supplémentation pendant 5 semaines avec 20% de fractions de céréales selon l'invention sur la fonction immunitaire des souris jeunes prématurément vieillies | | | |
|---|---|---|---|
| Paramètres | Populations | Résultats | Changement au cours de l'âge |
| Index d'adhérence de macrophages | PAM-B<br>PAM-C | NS<br>NS | V |
| Index de chimiotaxie des macrophages | PAM-B<br>PAM-C | NS<br>V | ¬ |
| Index de phagocytose | PAM-B<br>PAM-C | <br>NS | ¬ |
| Index d'efficacité de phagocytose | PAM-B<br>PAM-C | NS<br>V | ¬ |
| Index d'adhérence de lymphocytes | PAM-B<br>PAM-C | ¬<br>NS | V |
| Index de chimiotaxie des lymphocytes | PAM-B<br>PAM-C | NS<br>NS | ¬ |
| Lymphoprolifération en réponse à la Con-A | PAM-B<br>PAM-C | NS<br>V | ¬ |
|  | PAM-B | NS |  |
| Lymphoprolifération en réponse à la LPS | PAM-B<br>PAM-C | NS<br>V | ¬ |
| Production de TNFα | PAM-B<br>PAM-C | NS<br>NS | V |
| Production de PGE2 | PAM-B<br>PAM-C | ¬<br>¬ | V |

B. Effet des biscuits sur la production de ROS et les antioxydants endogènes des souris jeunes prématurément vieillies

La supplémentation avec du germe de blé et de la farine de sarrasin ne bloque pas la production de radicaux libres après stimulation avec PMA (Phorbol Myristate Acetate), elle diminue le stress oxydatif en augmentant l'ensemble de marqueurs endogènes du système antioxydant (tableau ci-dessous).

**Tableau 16**

| Effet d'une supplémentation pendant 5 semaines avec 20% de fractions B et C sur la production de ROS et les niveaux d'antioxydants endogènes des souris jeunes prématurément vieillies | | |
|---|---|---|
| Paramètres | Population | Résultats |
| Niveau extracellulaire basal d'anion superoxyde | PAM-B | NS |
|  | PAM-C | NS |
| Niveau intracellulaire de H2O2 après stimulation (PMA) | PAM-B | V |
|  | PAM-C | V |
| Production de NO | PAM-B | NS |
|  | PAM-C | NS |
| Activité de la Superoxyde dismutase | PAM-B | V |
|  | PAM-C | NS |

(suite)

| Effet d'une supplémentation pendant 5 semaines avec 20% de fractions B et C sur la production de ROS et les niveaux d'antioxydants endogènes des souris jeunes prématurément vieillies | | |
|---|---|---|
| Paramètres | Population | Résultats |
| Activité de la Glutathion peroxydase | **PAM-B** | V |
| | **PAM-C** | V |
| Activité de la Catalase | **PAM-B** | V |
| | **PAM-C** | V |
| Activité de la Glutathion réductase | **PAM-B** | V |
| | **PAM-C** | V |
| Concentration en Glutathion total | **PAM-B** | V |
| | **PAM-C** | V |
| Concentration en glutathion réduit | **PAM-B** | V |
| | **PAM-C** | V |
| Concentration en glutathion oxydé | **PAM-B** | ¬ |
| | **PAM-C** | ¬ |
| GSSG/GSH | **PAM-B** | ¬ |
| | **PAM-C** | ¬ |
| Malondialdéhyde | **PAM-B** | NS |
| | **PAM-C** | ¬ |

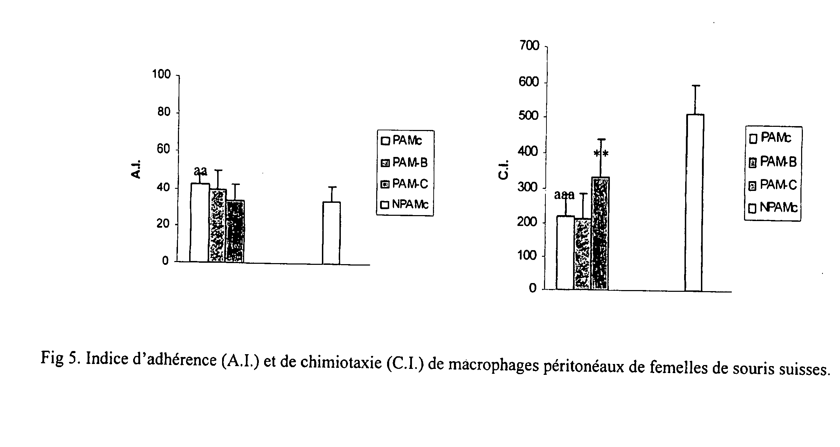

Les détails des résultats sont présentés sur les figures 5-12.

Les figures 5-12 décrivent l'effet du régime supplémenté (5 semaines) selon l'invention sur les fonctions immunes des leucocytes péritonéaux de souris jeunes PAM et NPAM.

La **Fig 5** représente l'indice d'adhérence (A.I.) et de chimiotaxie (C.I.) de macrophages péritonéaux de femelles de souris suisses. Les colonnes représentent la valeur moyenne +/- écart-type pour des expériences menées en duplicat. PAMc (n=8), PAM-B et PAM-C (n=6). aa p < 0,01 et aaa p<0,001 par rapport aux valeurs du groupe témoin NPAM. ** p<0,01 par rapport aux valeurs du groupe témoin PAM.

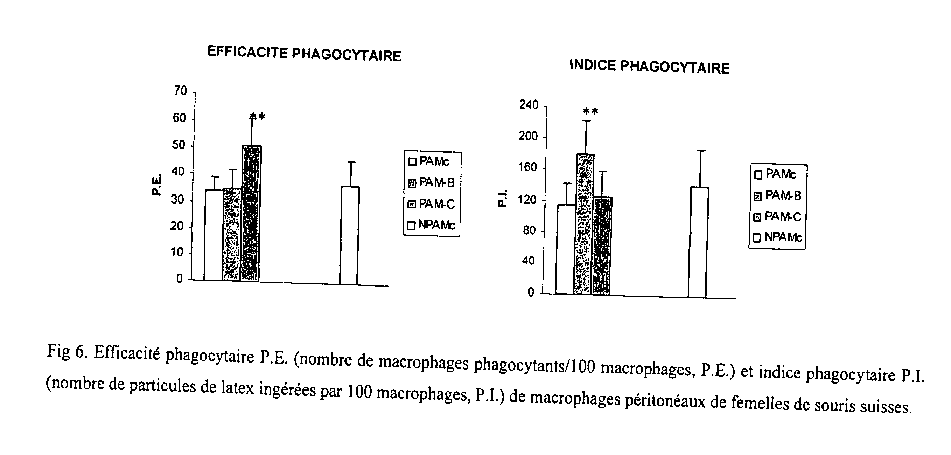

La **Fig 6** représente l'efficacité phagocytaire P.E. (nombre de macrophages phagocytants/100 macrophages, P.E.) et indice phagocytaire P.I. (nombre de particules de latex ingérées par 100 macrophages, P.I.) de macrophages péritonéaux de femelles de souris suisses. Les colonnes représentent la valeur moyenne +/- écart-type pour des expériences menées en duplicat. PAMc (n=8), PAM-B et PAM-C (n=6). ** p<0,01 par rapport aux valeurs du groupe témoin PAM.

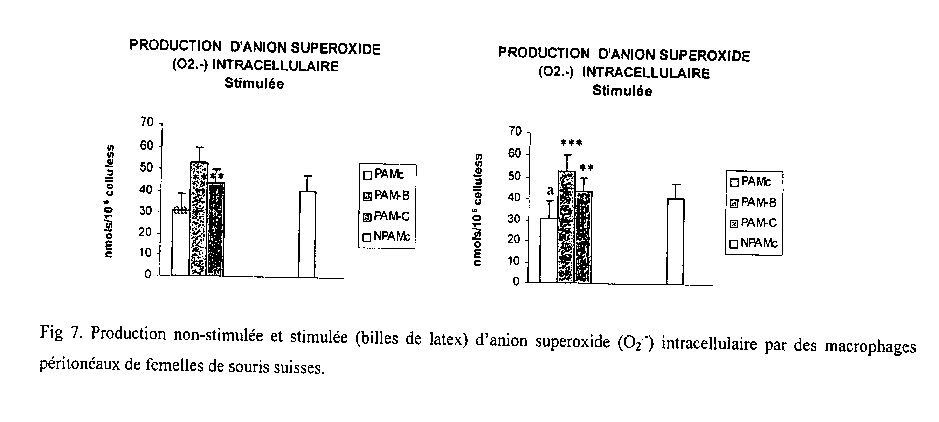

La **Fig 7** représente la production non-stimulée et stimulée (billes de latex) d'anion superoxide ($O_2^{\cdot-}$) intracellulaire par des macrophages péritonéaux de femelles de souris suisses. Les colonnes représentent la valeur moyenne +/- écart-type pour des expériences menées en duplicat. PAMc (n=7), PAM-B et PAM-C (n=6). a p < 0,05 et aa p<0,01 par rapport aux valeurs du groupe témoin NPAM. ** p<0,01 et *** p<0,001 par rapport aux valeurs du groupe témoin PAM.

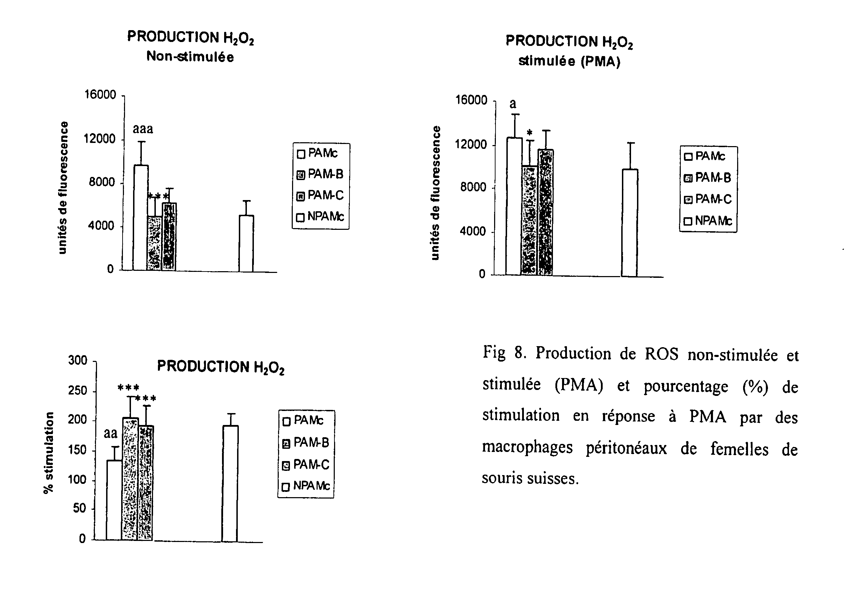

La **Fig 8** représente la production de ROS non-stimulée et stimulée (PMA) et pourcentage (%) de stimulation en réponse à PMA par des macrophages péritonéaux de femelles de souris suisses. Les colonnes représentent la valeur moyenne +/- écart-type pour des expériences menées en duplicat. PAMc (n=10), PAM-B and PAM-C (n=11). a p < 0,05 aa p<0,01 et aaa p<0,001 par rapport aux valeurs du groupe témoin NPAM. * p<0,05 et *** p<0,001 par rapport aux valeurs du groupe témoin PAM.

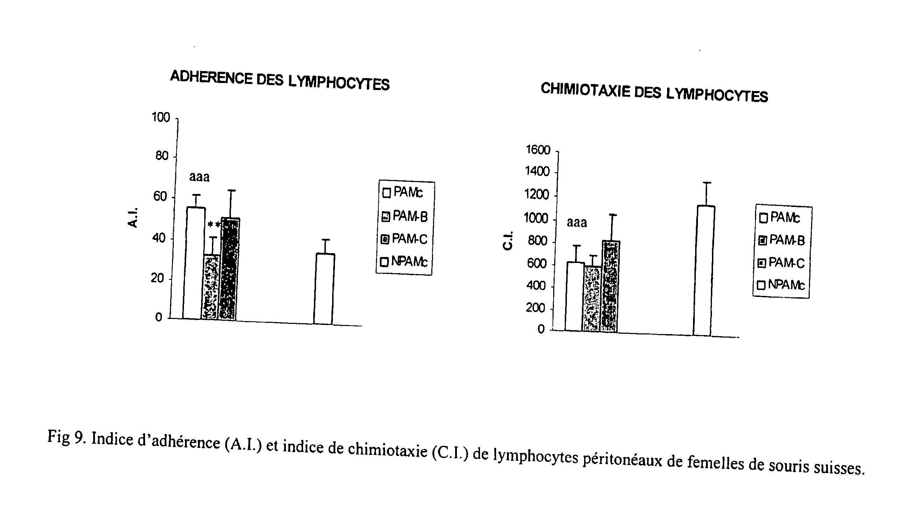

La **Fig 9** représente l'indice d'adhérence (A.I.) et indice de chimiotaxie (C.I.) de lymphocytes péritonéaux de femelles de souris suisses.

Les colonnes représentent la valeur moyenne +/- écart-type pour des expériences menées en duplicat. PAMc (n=8), PAM-B et PAM-C (n=6) pour le test d'adhérence; PAMc (n=8), PAM-B (n=8) et PAM-C (n=6) pour le test de chimiotaxie. aaa p<0,001 par rapport aux valeurs du groupe témoin NPAM. ** p<0,01 par rapport aux valeurs du groupe témoin PAM.

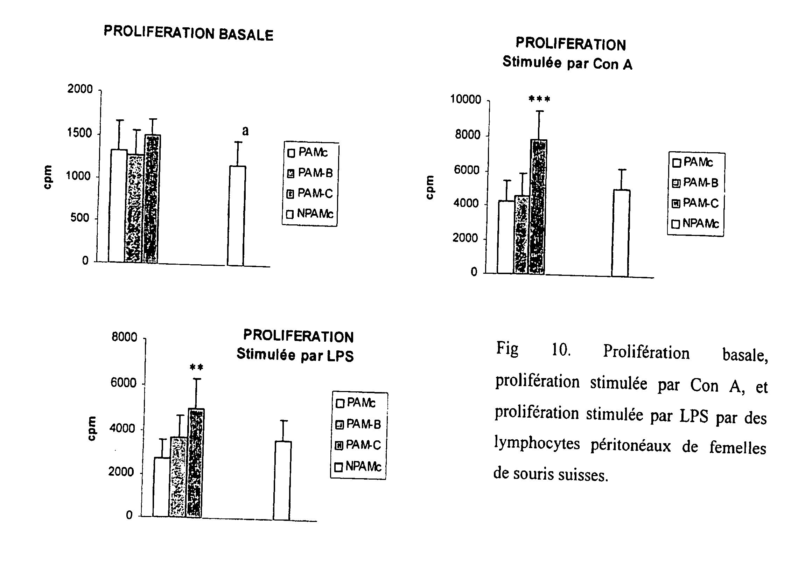

La **Fig 10** représente la prolifération basale, prolifération stimulée par Con A, et prolifération stimulée par LPS par des lymphocytes péritonéaux de femelles de souris suisses. Les colonnes représentent la valeur moyenne +/- écart-type pour des expériences menées en duplicat. PAMc (n=10), PAM-B et PAM-C (n=8). a p<0,05 par rapport aux valeurs du groupe témoin NPAM. ** p<0,01 et *** p< 0,001 par rapport aux valeurs du groupe témoin PAM.

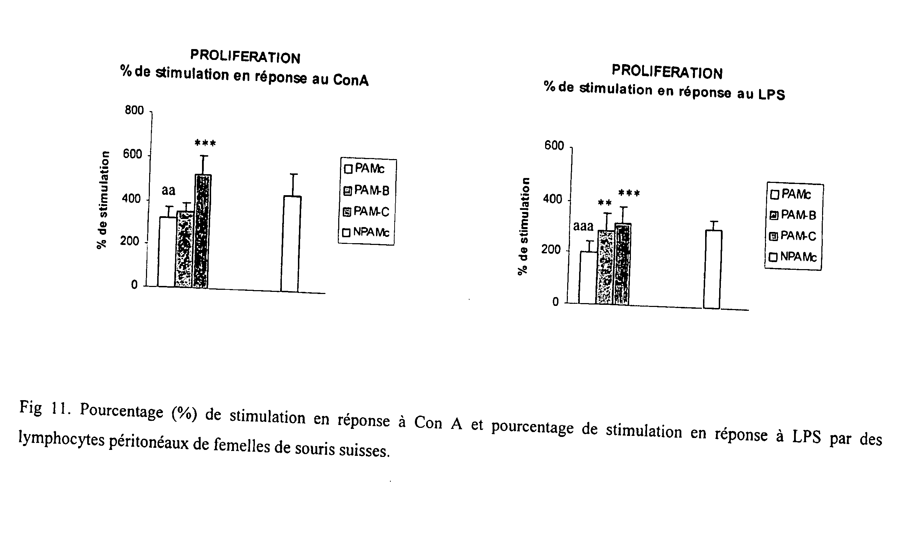

La **Fig 11** représente le pourcentage (%) de stimulation en réponse à Con A et pourcentage de stimulation en réponse à LPS par des lymphocytes péritonéaux de femelles de souris suisses. Les colonnes représentent la valeur moyenne +/- écart-type pour des expériences menées en duplicat. PAMc (n=10), PAM-B et PAM-C (n=8). aa p <0,01 et aaa p<0.001 par rapport aux valeurs du groupe témoin NPAM. ** p<0,01 and *** p<0,001 par rapport aux valeurs du groupe témoin PAM.

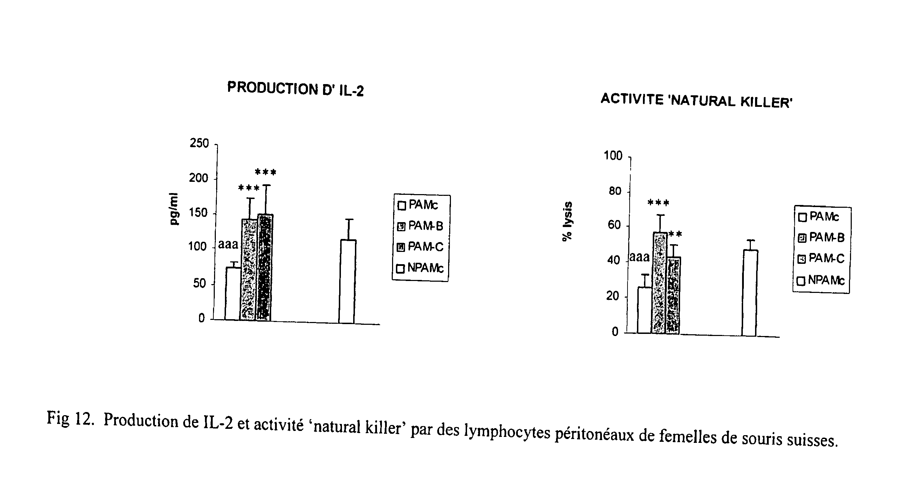

La **Fig 12** représente la production de IL-2 et activité 'natural killer' par des lymphocytes péritonéaux de femelles de souris suisses. Les colonnes représentent la valeur moyenne +/- écart-type pour des expériences menées en duplicat. PAMc (n=8), PAM-B et PAM-C (n=10) pour la production de IL-2; PAMc (n=6), PAM-B et PAM-C (n=6) pour l'activité 'natural killer'.aaa p<0,001 par rapport aux valeurs du groupe témoin NPAM. ** p<0,01 et *** p<0,001 par rapport aux valeurs du groupe témoin PAM.

**Conclusions de cette étude**

**1. Les souris prématurément vieillies (PAM) présentent un déclin de la fonction immunitaire.**
D'après nos résultats, la plupart des paramètres de la fonction immunitaire mesurés chez les souris jeunes prématurément vieillies (PAM) montrent des valeurs inférieures par rapport aux souris non-prématurément vieillies (NPAM), alors que les deux groupes ont le même âge chronologique. Ces données confirment d'une part, le déclin de la fonction immunitaire qui accompagne le vieillissement, et d'autre part l'intérêt de notre modèle de vieillissement.

**2. Une supplémentation avec du germe de blé et de la farine de sarrasin permet de restaurer certaines fonctions du système immunitaire qui déclinent au cours du vieillissement.**

**3. Les supplémentations avec du germe de blé et de la farine de sarrasin provoquent une augmentation significative de tous les composants antioxydants endogènes mesurés** (glutathion total, glutathion réduit et activité des 4 enzymes anti-oxydantes)

4. **La supplémentation avec du germe de blé et de la farine de sarrasin prévient le stress oxydatif des leucocytes.**
Une moindre fuite de ROS vers l'extérieur de la cellule accompagnée d'une amélioration du système antioxydant est le garant d'une diminution du stress oxydatif (GSSG, malondialdéhyde et rapport GSSG/GSH diminués après supplémentation) ainsi que des moindres dégâts oxydatifs de la cellule.

<u>**EXEMPLE 7**</u> **: Effet d'une supplémentation (15 semaines) avec du germe de blé et de la farine de sarrasin sur des paramètres de la fonction immunitaire, du système anti-oxydant et du stress oxydatif chez la souris adulte prématurément vieillie**

On a procédé comme ci-dessus à l'exemple 6, après 15 semaines de supplémentation, et on a obtenu des résultats analogues. Cet exemple permet de renforcer les conclusions de l'exemple 6 comme suit :

5. **La supplémentation avec du germe de blé et de la farine de sarrasin a un meilleur effet sur les paramètres étudiés lorsque la durée de supplémentation est longue** (15 semaines), en comparaison avec la supplémentation sur 5 semaines.

6. La supplémentation avec de la farine de sarrasin semble avoir un meilleur effet sur les paramètres étudiés lorsque la durée de supplémentation est courte (5 semaines). Après une période de supplémentation plus longue, la supplémentation avec du germe de blé ou de la farine de sarrasin a un effet similaire, à la fois quantitatif et qualitatif sur les paramètres.

**EXEMPLE 8** : **Effet d'une supplémentation avec du germe de blé, de la farine de sarrasin, du son de riz et des remoulages de blé sur des paramètres de la fonction immunitaire, du système anti-oxydant et du stress oxydatif.**

Dans l'étude précédente, On a montré que la supplémentation avec du germe de blé et de la farine de sarrasin avait un effet bénéfique sur la fonction immunitaire et le système antioxydant endogène des souris jeunes prématurément vieillies. Etant donné que le système immunitaire est aujourd'hui considéré comme un marqueur de longévité, on peut donc espérer que les souris supplémentées aient une espérance de vie plus longue.

Dans cet exemple, on a utilisé, en plus du germe de blé et de la farine de sarrasin, deux autres fractions intéressantes pour leur qualité nutritionnelle (son de riz et remoulages de blé). Les tests réalisés dans cette étude sont faits chez la souris saine au cours du vieillissement (stress oxydatif chronique) et dans un deuxième temps chez la souris à la suite d'un stress oxydatif aigu provoqué par un choc endotoxinique. La deuxième partie de cette étude permet d'évaluer l'effet de la supplémentation avec du germe de blé, de la farine de sarrasin, du son de riz et des remoulages de blé sur la survie des souris.

**Echantillons biologiques et marqueurs :**

Les analyses réalisées concernent les mêmes fonctions que celles des exemples 6 et 7, et sont effectuées selon le même protocole à 5 et 20 semaines dès le début de la supplémentation. Toutefois elles sont moins nombreuses :

> La mesure des paramètres de la fonction immunitaire se fait aussi sur les macrophages et les lymphocytes et les marqueurs mesurés sont la chémiotaxie, les niveaux de ROS intracellulaires, la prolifération et la production d'IL-2.
> Les paramètres du stress oxydatif étudiés sont les composés oxydants (ROS extracellulaires, le glutathion oxydé (GSSG) et médiateurs pro-inflammatoires : TNF$\alpha$ et PGE2) et les marqueurs du système antioxydant (niveau de glutathion réduit (GSH) et activité de la catalase (CAT)).
> Les dommages oxydatifs sur les lipides sont mesurés par le niveau de malondialdéhyde (MDA).

Les animaux contrôles reçoivent un régime standard (100%), et les animaux supplémentés reçoivent un régime comprenant 80% du régime standard et 20% d'une des fractions de céréales.

Chez les animaux soumis à un stress oxydatif chronique (souris saines vieillisantes), les échantillons du péritoine sont prélevés après 5 et 20 semaines de supplémentation. Chez les souris soumises à un stress oxydatif aigu (choc endotoxique), les échantillons sont prélevés après 20 semaines de supplémentation, avant le choc, puis 2 heures et 24 heures après le choc.

**Conclusions de cette étude**

1. La supplémentation avec du germe de blé, de la farine de sarrasin, du son de riz et des remoulages de blé permet de restaurer certaines fonctions du système immunitaire chez la souris saine au cours du vieillissement.

2. La supplémentation avec du germe de blé, de la farine de sarrasin, du son de riz et des remoulages de blé permet de neutraliser le stress oxydatif des leucocytes péritonéaux des souris saines au cours du vieillissement, d'augmenter les marqueurs du système antioxydant, de diminuer les composés oxydants et inflammatoires et par conséquent de diminuer le stress oxydatif ainsi que les dommages oxydatifs sur les lipides.

3. La supplémentation avec du germe de blé, de la farine de sarrasin, du son de riz et des remoulages de blé a un meilleur effet sur les paramètres étudiés lorsqu'elle se fait sur une durée longue, chez les souris saines.

4. Sur une courte durée, la supplémentation de la diète avec la farine de sarrasin et les remoulages de blé a le meilleur effet chez les souris saines au cours du vieillissement. Au contraire, sur une plus longue période (20 semaines), l'effet des fractions de céréale est identique sur les différents paramètres étudiés.

5. L'administration d'une endotoxine (LPS) entraîne une forte activation de certains paramètres sur les leucocytes du péritoine, traduisant un état d'inflammation et d'oxydation. Ce stress oxydatif leucocytaire pourrait être un facteur important dans la dégradation de l'état général de ces animaux, les conduisant à la mort.

6. La supplémentation avec du germe de blé, de la farine de sarrasin, du son de riz et des remoulages de blé rétablit cet état, conduisant dans la plupart des cas à des valeurs similaires à celles des contrôles sans endotoxémie.

7. Il est difficile de différencier les effets des fractions de céréales entre elles.

**EXEMPLE 9: Effet d'une supplémentation avec des biscuits riches en polyphénols sur des paramètres de la fonction immunitaire du système oxydant et du stress oxydatif chez la souris adulte au cours du vieillissement.**

On a effectué des tests analogues à ceux réalisés dans l'exemple 8 (à 5, 15 et 30 semaines), mais en utilisant des produits céréaliers selon l'invention, en l'espèce des biscuits.

Les tests ont été réalisés avec les biscuits Références CO49, CO50, CO52 et CO53 décrits dans le tableau 12 de l'exemple 5.

Les résultats obtenus sont de même nature que les résultats précédemment observés avec l'utilisation des fractions de céréales selon l'invention, alors que les produits céréaliers ont subi les étapes de transformation nécessaires à leur réalisation.

**EXEMPLE 10 : Mesure de l'activité anti-tumorale du germe de blé, de la farine de sarrasin, du son de riz et des remoulages de blé chez la souris.**

**Animaux :**

200 souris males Swiss, agées de 2 mois (100 par phase expérimentale) ont été présélectionnées pour cette étude. Les souris ont été placées dans des cages (4 par cage) avec un cycle inverse lumière/obscurité de 12/12 heures et ont été acclimatées pendant 7 jours avant le début de l'étude. L'eau du robinet et la nourriture sont fournis *ad libitum.* Tous les animaux ont été traités en accord avec les directives 86/6091 EEC de la Communauté européenne.

Les fractions suivantes ont été testées :

- Germe de blé (fraction B),
- Farine de sarrasin (fraction C),
- Son de riz (fraction D),
- Remoulages de blé (fraction E).

**Groupes expérimentaux :**

Les animaux ont été répartis en 10 groupes, chacun composés de 20 animaux :
➢ Groupe contrôle : 20 souris alimentées avec un régime standard (AIN-93).

*Composition de la diète AIN-93 (Panlab, Barcelone, Espagne). Tous les animaux contrôles reçoivent exclusivement cette diète*

| Nutriments | Composition en mg/kg |
|---|---|
| Calories [a] | 2906,7 |
| Protéines [b] | 153 |
| Lipides [b] | 28,3 |
| Vitamine A | 2997 |
| Niacine | 91 |
| Pyridoxine | 5,5 |
| Vitamine E | 17 |
| Acide folique | 0,6 |
| Magnésium | 1440 |
| Fer | 166 |
| Zinc | 79 |

(suite)

| Nutriments | Composition en mg/kg |
|---|---|
| Sélénium | 0,2 |
| a : en kcal/kg ; b : en g.kg | |

➢ Groupe contrôle + N-Nitrosodiéthylamine (NDEA) : 20 souris alimentées avec un régime standard (AIN-93) et supplémentées en nitrosamine (0,4 μg/j/souris, diluée dans de l'eau).
➢ Groupe B : 20 souris alimentées avec 20% de la fraction de céréale B et 80% du régime standard (AIN-93).
➢ Groupe B + NDEA : 20 souris supplémentées en nitrosamine (0,4 μg/j/souris, diluée dans de l'eau) et alimentées avec 20% de la fraction de céréale B et 80% du régime standard (AIN-93).
➢ Groupe C : 20 souris alimentées avec 20% de la fraction de céréale C et 80% du régime standard (AIN-93).
➢ Groupe C + NDEA : 20 souris supplémentées en nitrosamine (0,4 μg/j/souris, diluée dans de l'eau) et alimentées avec 20% de la fraction de céréale C et 80% du régime standard (AIN-93).
➢ Groupe D : 20 souris alimentées avec 20% de la fraction de céréale D et 80% du régime standard (AIN-93).
➢ Groupe D + NDEA : 20 souris supplémentées en nitrosamine (0,4 μg/j/souris, diluée dans de l'eau) et alimentées avec 20% de la fraction de céréale D et 80% du régime standard (AIN-93).
➢ Groupe E : 20 souris alimentées avec 20% de la fraction de céréale E et 80% du régime standard (AIN-93).
➢ Groupe E + NDEA : 20 souris supplémentées en nitrosamine (0,4 μg/j/souris, diluée dans de l'eau) et alimentées avec 20% de la fraction de céréale E et 80% du régime standard (AIN-93).

**Echantillons biologiques et marqueurs :**

Pour l'examen des organes et des échantillons, les souris sont sacrifiées par une anesthésie au dioxyde de carbone suivi d'une dislocation cervicale, à 12 mois du début de la supplémentation. Les échantillons prélevés sont :

➢ Extraction sanguine
➢ Extraction hépatique
➢ Extraction du ganglion mésentérique
➢ Extraction de l'intestin (10 cm).

Les marqueurs utilisés pour évaluer *in vivo* l'effet des différentes fractions de céréales B, C, D, E, après 6 et 12 semaines de supplémentation, sur plusieurs paramètres métaboliques et physiologiques du foie et de l'intestin sont les suivants : Les activités des phosphatases alcalines issues de tissus intestinaux et hépatiques par la méthode de Kuftiniec et Miller (Kuftinec, MM. and Miller, SA. Alkaline and acid phosphatase activities during growth of long bones and mandibles. Calcif. Tissue Res. 1972 ; 9:173-178).

➢ Le stress oxydatif par le ratio GSH/GSSG avec les méthodes de Tietze (Tietze, F. Enzymic method for quantitative détermination of nanogram amounts of total and oxidized glutathione: applications to mammalian blood and other tissues. Anal Biochem. 1969 ; 27(3):502-22) et Sacchetta et al., (Sacchetta, P., Di Cola, D. and Federici, G. Alkaline hydrolysis of N-ethylmaleimide allows a rapid assay of glutathione disulfide in biological samples. 1986).
➢ Etudes des cryptes aberrantes chez les souris ayant reçu de la nitrosamine.

**Analyses statistiques :**

Les données sont analysées par une analyse de variance à un facteur. Lorsque les analyses de variance montrent une différence significative entre les groupes (f test <0,05), plusieurs comparaisons sont alors faites avec le test de Dunnett's en comparant chaque groupe avec le groupe contrôle.
* $p < 0,05$ ; ** $p < 0,01$ par rapport au groupe contrôle correspondant par niveau d'âge.
Les résultats obtenus sont les suivants :

**A. Effet de la supplémentation avec les quatre fractions de céréales testées (B, C, D et E) sur l'activité des phosphatases alcalines chez des souris jeunes**

Les phosphatases alcalines hépatiques et intestinales sont sensibles au bon fonctionnement du foie et de l'intestin. La supplémentation sur 6 et 12 semaines avec les fractions de céréales B et C diminue leur fonctionnement chez les souris saines. En revanche, ces enzymes étant très sensibles, leur activité est stimulée chez les souris ayant reçu de la nitrosamine à 12 semaines et ayant reçu les fractions de céréales B, D et E.

*Effet d'une supplémentation pendant 6 semaines avec 20 % de fractions de céréales naturellement riches en polyphénols sur l'activité des phosphatases alcalines hépatiques et intestinales chez des souris jeunes saines ou ayant reçu de la nitrosamine*

| Paramètres | B | B+NDEA | C | C+NDEA | D | D+NDEA | E | E+NDEA |
|---|---|---|---|---|---|---|---|---|
| Activité de la phosphatase alcaline hépatique | ↓*** | ↑*** | NS | ↓*** | ↓*** | NS | NS | ↓* |
| Activité de la phosphatase alcaline intestinale | ↓*** | ↓** | NS | ↓* | ↓*** | ↓*** | NS | ↓* |

*Effet d'une supplémentation pendant 12 semaines avec 20 % de fractions de céréales naturellement riches en polyphénols sur l'activité des phosphatases alcalines hépatiques et intestinales chez des souris jeunes saines ou ayant reçu de la nitrosamine*

| Paramètres | B | B+NDEA | C | C+NDEA | D | D+NDEA | E | E+NDEA |
|---|---|---|---|---|---|---|---|---|
| Activité de la phosphatase alcaline hépatique | ↓*** | ↑* | ↓*** | ↓** | NS | NS | NS | ↑** |
| Activité de la phosphatase alcaline intestinale | NS | ↑* | NS | NS | ↓*** | ↑*** | ↓** | NS |

**B. Effet de la supplémentation avec les quatre fractions de céréales testées (B, C, D et E) sur le statut en glutathion chez des souris jeunes**

Chez les souris saines, la supplémentation avec les fractions B, C et D entraîne la diminution significative du ratio GSSG/GSH hépatique. La fraction E n'a ici pas d'effet significatif.

La supplémentation avec les fractions C et D diminue significativement le ratio glutathion oxydé (GSSG)/glutathion réduit (GSH) intestinal, alors que les fractions B et E n'ont pas d'effet.

Chez les souris ayant reçu de la nitrosamine, le ratio GSSG/GSH est augmenté et par conséquent augmente les niveaux de stress oxydatif. La supplémentation avec les fractions B, C et D entraîne la diminution significative du ratio GSSG/GSH hépatique.

*Effet d'une supplémentation pendant 6 semaines avec 20 % de fractions de céréales naturellement riches en polyphénols sur le ratio GSSG/GSH hépatique et intestinal chez des souris jeunes saines ou ayant reçu de la nitrosamine*

| Paramètres | B | B+NDEA | C | C+NDEA | D | D+NDEA | E | E+NDEA |
|---|---|---|---|---|---|---|---|---|
| Ratio GSSG/GSH hépatique | ↓*** | ↓* | ↓*** | ↓*** | ↓*** | ↑*** | NS | NS |
| Ratio GSSG/GSH intestinal | ↑* | NS | ↓*** | ↑** | ↓*** | NS | NS | ↑*** |

**C. Effet de la supplémentation avec quatre fractions de céréales (B, C, D et E) sur les cryptes aberrantes chez des jeunes souris ayant reçu de la nitrosamine**

Les cryptes aberrantes (ACF) sont reconnues comme étant des lésions prénéoplasiques initiales. Par ailleurs, le développement de ces lésions dans le colon est lié à des évènements génotoxiques et il est désormais reconnu que les ACF puissent être des précurseurs du cancer colorectal (Bird, RP., McLellan, EA. and Bruce, WR. Aberrant crypts, putative precancerous lésions in the study of the rôle of diet in the aetiology of colon cancer. Cancer Surv. 1989 ; 8:189-200. Pretlow, TP., O'Riordan, M., Somich, GA., Amini, SB. and Pretlow, TG. Aberrant crypts correlate with tumor incidence in F344 rats treated with azoxymethane and phytate. Carcinogenesis. 1992 ;13:1509-1512. Apanasovich, TV., Sheather, S., Lupton, JR., Popovic, N., Turner, ND., Chapkin, RS., Braby, LA. and Carroll, RJ. Testing for spatial corrélation in nonstationary binary data with application to aberrant crypt foci in colon carcinogenesis. Biometrics. 2003 ; 59:752-761).

La supplémentation de la diète avec des fractions de céréales naturellement riches en polyphénols diminue l'apparition des cryptes aberrantes chez les souris à 12 semaines.

**Conclusions de l'étude**

Les résultats de cette étude montrent que la supplémentation avec des fractions de céréales naturellement riches en polyphénols chez des souris saines a des effets bénéfiques sur :

> ➢ L'activité des phosphatases alcalines au niveau du foie et de l'intestin. Ces souris ont alors un meilleur état de santé général que leur contrôle.
> ➢ Le ratio GSSG/GSH, ce qui traduit alors une diminution du stress oxydatif chez ces souris.

Chez les souris ayant reçu de la nitrosamine en même temps que leur supplémentation, les résultats montrent que :

> ➢ La supplémentation permet de diminuer l'activité de la phosphatase alcaline hépatique ou intestinale à 6 semaines. De ce fait les sujets supplémentés ont un

meilleur état de santé que leur correspondant contrôle.

> ➢ La supplémentation a un effet bénéfique sur le stress oxydatif au niveau hépatique.

> ➢ Les fractions de céréales protègent les souris contre la formation de cryptes aberrantes.

Les résultats de cette étude montrent donc que la supplémentation avec les fractions de céréales B, C, D et E a un effet bénéfique sur les paramètres étudiés de cancérogenèse et d'oxydation.

**Ainsi, l'ingestion de produits céréaliers selon l'invention incorporant des fractions ci-dessus, permet d'améliorer de manière significative la santé de la population.**

*Effet d'une supplémentation pendant 6 semaines avec 20 % de fractions de céréales naturellement riches en polyphénols sur l'activité des phosphatases alcalines chez des souris jeunes (avec ou sans NDEA) (valeur relative)*

| Paramètres | Groupes | 6 semaines | Groupes | 6 semaines |
|---|---|---|---|---|
| **Activité de la phosphatase alcaline hépatique** | Control | 100,51 | Control+N DEA | 100 |
| | B | 68,94 | B+NDEA | 119,46 |
| | C | 100,56 | C+NDEA | 83,44 |
| | D | 79,38 | D+NDEA | 101,52 |
| | E | 102,2 | E+NDEA | 94,31 |

(suite)

| Paramètres | Groupes | 6 semaines | Groupes | 6 semaines |
|---|---|---|---|---|
| **Activité de la phosphatase alcalines intestinale** | Control | 100 | Control+N DEA | 100 |
| | B | 54,8 | B+NDEA | 61,48 |
| | C | 112,83 | C+NDEA | 75,8 |
| | D | 51,47 | D+NDEA | 37,47 |
| | E | 99,76 | E+NDEA | 74,91 |

*Effet d'une supplémentation pendant 6 et 12 semaines avec 20 % de fractions de céréales naturellement riches en polyphénols sur le statut en glutathion hépatique et intestinale chez des souris jeunes (avec ou sans NDEA) (valeur relative)*

| Paramètres | Groupes | 6 semaines | 12 semaines | Groupes | 6 semaines | 12 semaines |
|---|---|---|---|---|---|---|
| Ratio GSSG/GSH hépatique | Control | 100 | 100 | Control+N DEA | 100 | 100 |
| | B | 80,37 | 84,55 | B+NDEA | 92,33 | 90,88 |
| | C | 75,5 | 72,22 | C+NDEA | 81,11 | 94,22 |
| | D | 55,25 | 49,22 | D+NDEA | 56 | 64,55 |
| | E | 97,55 | 94,44 | E+NDEA | 96,77 | 101,5 |
| Ratio GSSG/GSH intestinal | Control | 100,44 | 100 | Control+N DEA | 100 | 100 |
| | B | 116,77 | 94,66 | B+NDEA | 87,57 | 85,5 |
| | C | 71,16 | 78,55 | C+NDEA | 136,79 | 110,44 |
| | D | 53,45 | 58,44 | D+NDEA | 113,5 | 98,37 |
| | E | 104,17 | 96,77 | E+NDEA | 162 | 147,88 |

**Revendications**

**1.** Produit céréalier de biscuiterie ou de panification sèche contenant de la farine de blé, **caractérisé en ce que** 20-40% en masse de farine de blé sont substitués par une fraction de céréale ou pseudo céréale constituée par :

- 15-25% de farine de sarrasin + 5-15% de son de riz, ou
- 15-25% de son de riz + 5-15% de farine de sarrasin, ou
- 15-25% de son de riz + 5-15% de remoulages blancs de blé, ou
- 5-15% de farine de sarrasin + 5-15% de son de riz + 5-15% de germes de blé,

ladite fraction de céréale ou de pseudo-céréale représentant 10-25% en masse par rapport à la masse totale des ingrédients,

ledit produit céréalier possédant un fort pouvoir anti-oxydant tel que mesuré par la méthode ORAC (Oxygen Radical Absorbance Capacity) supérieur ou égal à 17 $\mu$mol équivalent de Trolox par gramme de produit fini ($\mu$mol TE/g), ledit pouvoir oxydant étant essentiellement apporté par la présence comme ingrédient de ladite fraction de céréale ou de pseudo-céréale.

**2.** Produit céréalier selon la revendication 1, contenant au moins 4, de préférence au moins 5 équivalents-milligrammes d'acide gallique de polyphénols totaux par gramme de produit fini (Eq. mg d'acide Gallique/g).

**3.** Produit céréalier selon l'une ou l'autre des revendications 1 et 2, contenant au moins un polyphénol choisi parmi les flavonoïdes, notamment la quercétine et la rutine, et les acides phénoliques, notamment les acides hydroxy-benzoïques, les acides hydroxycinnamiques, l'acide p-hydroxybenzoïque, l'acide vanillique, l'acide p-coumarique, l'acide sinapique, l'acide férulique et ses dérivés estérifiés comme le γ-oryzanol, ainsi que leurs mélanges, l'acide férulique étant préféré.

4. Produit céréalier selon l'une quelconque des revendications précédentes, contenant :

- au moins 50, de préférence au moins 100 mg de magnésium pour 100 g de produit fini et/ou
- au moins 0.8, de préférence au moins 1.3 mg de zinc pour 100 g de produit fini et/ou
- au moins 1, de préférence au moins 2 μg de sélénium pour 100 g de produit fini.

5. Produit céréalier selon l'une quelconque des revendications précédentes, contenant :

- au moins 0.20, de préférence au moins 0.30 mg de vitamine B1 pour 100 g de produit fini et/ou
- au moins 40, de préférence au moins 50 μg de vitamine B9 pour 100 g de produit fini.

6. Produit céréalier selon l'une quelconque des revendications précédentes, **caractérisé en ce que** 30% en masse de farine de blé sont substitués par au moins une fraction de céréale ou de pseudo-céréale.

7. Produit céréalier selon la revendication précédente, dans lequel 30% en masse de farine de blé sont substitués par :

- 20% de farine de sarrasin + 10% de son de riz, ou
- 20% de son de riz + 10% de farine de sarrasin, ou
- de préférence 20% de son de riz + 10% de remoulages blancs de blé, ou
- 10% de farine de sarrasin + 10% de son de riz + 10% de germes de blé.

8. Produit céréalier selon l'une quelconque des revendications précédentes, contenant en outre au moins un ingrédient ou additif choisi parmi les sucres, les édulcorants, les fruits secs, les émulsifiants, les rehausseurs de goût, les arômes, les poudres levantes, les colorants, les matières grasses telles les huiles alimentaires, les oeufs et produits dérivés, les produits laitiers et le sel de table.

9. Produit céréalier selon l'une quelconque des revendications précédentes, contenant en outre au moins un fruit, notamment des baies, et/ou au moins un fruit sec, du chocolat, et/ou un extrait de thé vert.

10. Procédé de fabrication d'un produit céréalier selon l'une quelconque des revendications 1 à 9, comprenant les étapes suivantes :

a. sélection des ingrédients,
b. mélange desdits ingrédients, en une ou plusieurs opérations, notamment dans un pétrin,
c. façonnage dudit produit, notamment par moulage à la rotative, découpe au roto-découpoir après laminage, agglomération, extrusion, co-extrusion, coulage de la pâte sur bandes pleines ou dans des moules de cuisson,
d. facultativement cuisson et/ou refroidissement, et
e. facultativement emballage,

dans lequel lesdits ingrédients comprennent au moins une fraction de céréale et/ou au moins une fraction de pseudo-céréale.

11. Procédé selon la revendication précédente, dans lequel 30% en masse de farine de blé sont substitués par :

- 20% de farine de sarrasin + 10% de son de riz, ou
- 20% de son de riz + 10% de farine de sarrasin, ou
- 20% de son de riz + 10% de remoulages blancs de blé, ou
- 10% de farine de sarrasin + 10% de son de riz + 10% de germes de blé.

12. Produit céréalier selon l'une quelconque des revendications 1 à 9, ou obtenu par le procédé selon l'une quelconque des revendications 10 ou 11 pour son utilisation dans l'augmentation, en particulier chez le sujet humain, de l'apport en anti-oxydants naturels et/ou en vitamines B1, B9, et/ou en minéraux : zinc, magnésium et sélénium et/ou en fibres ainsi que dans la prévention des effets délétères liés au stress oxydatif et du déclin de la fonction immunitaire.

13. Utilisation d'une fraction de céréale ou pseudo céréale constituée par :

- 15-25% de farine de sarrasin + 5-15% de son de riz, ou
- 15-25% de son de riz + 5-15% de farine de sarrasin, ou
- 15-25% de son de riz + 5-15% de remoulages blancs de blé, ou
- 5-15% de farine de sarrasin + 5-15% de son de riz + 5-15% de germes de blé, pour substituer 20-40% en masse de farine de blé dans un produit céréalier de biscuiterie ou de panification sèche contenant de la farine de blé,

ladite fraction de céréale ou de pseudo-céréale représentant 10-25% en masse par rapport à la masse totale des ingrédients,

ledit produit céréalier possédant un fort pouvoir anti-oxydant tel que mesuré par la méthode ORAC (Oxygen Radical Absorbance Capacity) supérieur ou égal à 17 μmol équivalent de Trolox par gramme de produit fini (μmol TE/g), ledit pouvoir oxydant étant essentiellement apporté par la présence comme ingrédient de ladite fraction de céréale ou de pseudo-céréale.

**Patentansprüche**

1. Gebäckprodukt aus der Gebäckherstellung oder aus der Herstellung trockenen Brotes, das Weizenmehl enthält, **dadurch gekennzeichnet, dass**, bezogen auf das Gewicht des Weizenmehls, 20-40 Gew.-% durch eine Getreidefraktion oder Pseudo-Getreidefraktion ersetzt werden, die aus Folgendem besteht:

   - 15-25% Buchweizenmehl + 5-15% Reiskleie oder
   - 15-25% Reiskleie + 5-15% Buchweizenmehl oder
   - 15-25% Reiskleie + 5-15% weißen Weizenmahlrückständen oder
   - 5-15% Buchweizenmehl + 5-15% Reiskleie + 5-15% Weizenkeimen,

   wobei die Getreidefraktion oder die Pseudo-Getreidefraktion, bezogen auf das Gesamtgewicht der Inhaltsstoffe, 10-25 Gew.-% ausmacht,

   wobei das Getreideprodukt ein mittels dem ORAC-(Oxygen Radical Absorbance Capacity)-Verfahren gemessenes starkes Antioxidationsvermögen von mehr als oder gleich 17 μmol Trolox-Äquivalenten pro Gramm Endprodukt (μmol TE/g) besitzt, wobei das Oxidationsvermögen im Wesentlichen durch das Vorliegen der Getreidefraktion oder Pseudo-Getreidefraktion als Inhaltsstoff eingebracht wird.

2. Getreideprodukt nach Anspruch 1, das mindestens 4, vorzugsweise mindestens 5 Milligramm-Äquivalente Gallussäure an Gesamt-Polyphenolen pro Gramm Endprodukt (mg-Äqu. Gallussäure/g) enthält.

3. Getreideprodukt nach einem der Ansprüche 1 und 2, das mindestens ein Polyphenol enthält, ausgewählt aus Flavonoiden, insbesondere Quercetin und Rutin, und Phenolsäuren, insbesondere Hydroxybenzoesäuren, Hydroxyzimtsäuren, p-Hydroxybenzoesäure, Vanillinsäure, p-Kumarinsäure, Sinapinsäure, Ferulasäure und deren veresterte Derivate, wie γ-Oryzanol, sowie deren Gemische, wobei Ferulasäure bevorzugt ist.

4. Getreideprodukt nach einem der vorhergehenden Ansprüche, das Folgendes enthält:

   - mindestens 50, vorzugsweise mindestens 100 mg Magnesium pro 100 g Endprodukt und/oder
   - mindestens 0,8, vorzugsweise mindestens 1,3 mg Zink pro 100 g Endprodukt und/oder
   - mindestens 1, vorzugsweise mindestens 2 μg Selen pro 100 g Endprodukt.

5. Getreideprodukt nach einem der vorhergehenden Ansprüche, das Folgendes enthält:

   - mindestens 0,20, vorzugsweise mindestens 0,30 mg Vitamin B1 pro 100 g Endprodukt und/oder
   - mindestens 40, vorzugsweise mindestens 50 μg Vitamin B9 pro 100 g Endprodukt.

6. Getreideprodukt nach einem der vorhergehenden Ansprüche, **dadurch gekennzeichnet, dass**, bezogen auf das Gewicht des Weizenmehls, 30 Gew.-% durch mindestens eine Getreidefraktion oder Pseudo-Getreidefraktion ersetzt sind.

7. Getreideprodukt nach dem vorhergehenden Anspruch, wobei, bezogen auf das Gewicht des Weizenmehls, 30 Gew.-% ersetzt sind durch:

   - 20% Buchweizenmehl + 10% Reiskleie oder

- 20% Reiskleie + 10% Buchweizenmehl oder
- vorzugsweise 20% Reiskleie + 10% weiße Weizenmahlrückstände oder
- 10% Buchweizenmehl + 10% Reiskleie + 10% Weizenkeime.

8. Getreideprodukt nach einem der vorhergehenden Ansprüche, das außerdem mindestens einen Inhaltsstoff oder einen Zusatzstoff enthält, der aus Zuckern, Süßstoffen, Trockenfrüchten, Emulgatoren, Geschmacksverstärkern, Aromastoffen, Treibmittelpulvern, Farbstoffen, Fettsubstanzen, wie Speiseölen, Eiern und davon herrührenden Produkten, Milchprodukten und Tafelsalz ausgewählt ist.

9. Getreideprodukt nach einem der vorhergehenden Ansprüche, das außerdem mindestens eine Frucht, insbesondere Beeren, und/oder mindestens eine Trockenfrucht, Schokolade und/oder einen Extrakt von grünem Tee enthält.

10. Verfahren zur Herstellung eines Getreideprodukts nach einem der Ansprüche 1 bis 9, das die folgenden Schritte umfasst:

    a. Auswählen der Inhaltsstoffe,
    b. Mischen der Inhaltsstoffe in einem oder mehreren Arbeitsschritten, insbesondere in einem Kneter,
    c. Formen des Produkts, insbesondere durch Rotationsformung, Zuschneiden in der Rotationsstanzmaschine nach Auswalzen, Verdichtung, Extrusion, Co-Extrusion, Gießen des Teigs auf durchgehende Bänder oder in Backformen,
    d. gegebenenfalls Backen und/oder Kühlen und
    e. gegebenenfalls Verpacken,
    wobei die Inhaltsstoffe mindestens eine Getreidefraktion und/oder mindestens ein Pseudo-Getreidefraktion umfassen.

11. Verfahren nach dem vorhergehenden Anspruch, wobei, bezogen auf das Gewicht des Weizenmehls, 30 Gew.-% ersetzt sind durch:

    - 20% Buchweizenmehl + 10% Reiskleie oder
    - 20% Reiskleie + 10% Buchweizenmehl oder
    - vorzugsweise 20% Reiskleie + 10% weiße Weizenmahlrückstände oder
    - 10% Buchweizenmehl + 10% Reiskleie + 10% Weizenkeime.

12. Getreideprodukt nach einem der Ansprüche 1 bis 9 oder erhalten nach dem Verfahren nach einem der Ansprüche 10 oder 11 für die Verwendung zur Erhöhung, insbesondere bei einem Menschen, der Aufnahme natürlicher Antioxidantien und/oder der Vitamine B1, B9 und/oder der Mineralien Zink, Magnesium und Selen und/oder von Fasern sowie zur Vorbeugung der schädlichen Wirkungen in Verbindung mit oxidativem Stress und einer Abnahme der Immunfunktion.

13. Verwendung einer Getreidefraktion oder Pseudo-Getreidefraktion, bestehend aus:

    - 15-25% Buchweizenmehl + 5-15% Reiskleie oder
    - 15-25% Reiskleie + 5-15% Buchweizenmehl oder
    - 15-25% Reiskleie + 5-15% weißen Weizenmahlrückständen oder
    - 5-15% Buchweizenmehl + 5-15% Reiskleie + 5-15% Weizenkeimen,
    zum Ersetzen von, bezogen auf das Gewicht des Weizenmehls, 20-40 Gew.-% in einem Weizenmehl enthaltenden Getreideprodukt aus der Gebäckherstellung oder aus der Herstellung trockenen Brotes,
    wobei die Getreidefraktion oder Pseudo-Getreidefraktion, bezogen auf das Gesamtgewicht der Inhaltsstoffe, 10-25 Gew.-% ausmacht,
    wobei das Getreideprodukt ein mittels dem ORAC-(Oxygen Radical Absorbance Capacity)-Verfahren gemessenes starkes Antioxidationsvermögen von mehr als oder gleich 17 $\mu$mol Trolox-Äquivalenten pro Gramm Endprodukt ($\mu$mol TE/g) besitzt, wobei das Oxidationsvermögen im Wesentlichen durch das Vorliegen der Getreidefraktion oder der Pseudo-Getreidefraktion als Inhaltsstoff eingebracht wird.

**Claims**

1. Cereal product for biscuit or crispbread production containing wheat flour, **characterised in that** 20-40% by mass of wheat flour is substituted by a cereal or pseudocereal fraction consisting of:

- 15-25% buckwheat flour + 5-15% rice bran, or
- 15-25% rice bran + 5-15% buckwheat flour, or
- 15-25% rice bran + 5-15% white wheat middlings, or
- 5-15% buckwheat flour + 5-15% rice bran + 5-15% wheat germ,
said pseudocereal fraction representing 10-25% by mass in relation to the total mass of the ingredients,
said cereal product having a high antioxidant potential as measured using the ORAC (Oxygen Radical Absorbance Capacity) method greater than or equal to 17 $\mu$mol Trolox equivalent per gram of finished product ($\mu$mol TE/g), said oxidant potential being essentially provided by the presence of said cereal or pseudocereal fraction as an ingredient.

2. Cereal product according to claim 1, containing at least 4, preferably at least 5 total polyphenol gallic acid milligram equivalents per gram of finished product (Gallic acid mg eq./g).

3. Cereal product according to either of claims 1 or 2, containing at least one polyphenol chosen from flavonoids, notably quercetin and rutin, and phenolic acids, notably hydroxybenzoic acids, hydroxycinnamic acids, p-hydroxybenzoic acid, vanillic acid, p-coumaric acid, sinapic acid, ferulic acid and the esterified derivatives thereof such as $\gamma$-oryzanol, and mixtures thereof, ferulic acid being preferred.

4. Cereal product according to any of the above claims, containing:

- at least 50, preferably at least 100 mg of magnesium per 100 g of finished product and/or
- at least 0.8, preferably at least 1.3 mg of zinc per 100 g of finished product and/or
- at least 1, preferably at least 2 $\mu$g of selenium per 100 g of finished product.

5. Cereal product according to any of the above claims, containing:

- at least 0.20, preferably at least 0.30 mg of vitamin B1 per 100 g of finished product and/or
- at least 40, preferably at least 50 $\mu$g of vitamin B9 per 100 g of finished product.

6. Cereal product according to any of the above claims, **characterised in that** 30% by mass of wheat flour is substituted by at least one cereal or pseudocereal fraction.

7. Cereal product according to the above claim, wherein 30% by mass of wheat flour is substituted by:

- 20% buckwheat flour + 10% rice bran, or
- 20% rice bran + 10% buckwheat flour, or
- preferably 20% rice bran + 10% white wheat middlings, or
- 10% buckwheat flour + 10% rice bran + 10% wheat germ.

8. Cereal product according to any of the above claims, further containing at least one ingredient or additive chosen from sugars, sweeteners, dried fruits, emulsifiers, flavour enhancers, flavourings, raising agents, colouring agents, fats such as dietary oils, eggs and derived products, dairy products and table salt.

9. Cereal product according to any of the above claims, further containing at least one fruit, notably berries, and/or at least one dried fruit, chocolate, and/or a green tea extract.

10. Method for manufacturing a cereal product according to any of claims 1 to 9, comprising the following steps:

a. selecting the ingredients,
b. mixing said ingredients, in one or a plurality of operations, notably in a dough mixer,
c. forming said product, notably by rotary moulding, cutting with a rotary cutter after rolling, agglomeration, extrusion, co-extrusion, pouring the dough along solid strips or into baking moulds,
d. optionally baking and/or cooling, and
e. optionally packaging,
wherein said ingredients comprise at least one cereal fraction and/or at least one pseudocereal fraction.

**11.** Method according to the above claim, wherein 30% by mass of wheat flour is substituted by:

  - 20% buckwheat flour + 10% rice bran, or
  - 20% rice bran + 10% buckwheat flour, or
  - 20% rice bran + 10% white wheat middlings, or
  - 10% buckwheat flour + 10% rice bran + 10% wheat germ.

**12.** Cereal product according to any of claims 1 to 9, or obtained by means of the method according to any of claims 10 or 11 for the use thereof in increasing, particularly for humans, the intake of natural antioxidants and/or vitamins B1, B9, and/or minerals: zinc, magnesium and selenium and/or fibre and in preventing the adverse effects associated with oxidative stress and decline in immune function.

**13.** Use of a cereal or pseudocereal fraction consisting of:

  - 15-25% buckwheat flour + 5-15% rice bran, or
  - 15-25% rice bran + 5-15% buckwheat flour, or
  - 15-25% rice bran + 5-15% white wheat middlings, or
  - 5-15% buckwheat flour + 5-15% rice bran + 5-15% wheat germ,
  to substitute 20-40% by mass of wheat flour in a cereal product for biscuit or crispbread production containing wheat flour,
  said pseudocereal fraction representing 10-25% by mass in relation to the total mass of the ingredients,
  said cereal product having a high antioxidant potential as measured using the ORAC (Oxygen Radical Absorbance Capacity) method greater than or equal to 17 $\mu$mol Trolox equivalent per gram of finished product ($\mu$mol TE/g), said oxidant potential being essentially provided by the presence of said cereal or pseudocereal fraction as an ingredient.

Fig 1. Teneurs en vitamines des fractions de céréales et pseudo-céréales selon l'invention

Fig 2. Teneur en Mg, Se et Zn des fractions de céréales et pseudo-céréales selon l'invention

Fig 3. Pouvoir anti-oxydant et teneurs en polyphénols totaux des fractions de céréales et pseudo-céréales selon l'invention

Fig 4. Densité des biscuits selon l'invention

Fig 5. Indice d'adhérence (A.I.) et de chimiotaxie (C.I.) de macrophages péritonéaux de femelles de souris suisses.

EP 1 541 026 B1

EFFICACITE PHAGOCYTAIRE

INDICE PHAGOCYTAIRE

Fig 6. Efficacité phagocytaire P.E. (nombre de macrophages phagocytants/100 macrophages, P.E.) et indice phagocytaire P.I. (nombre de particules de latex ingérées par 100 macrophages, P.I.) de macrophages péritonéaux de femelles de souris suisses.

Fig 7. Production non-stimulée et stimulée (billes de latex) d'anion superoxide ($O_2^-$) intracellulaire par des macrophages péritonéaux de femelles de souris suisses.

**PRODUCTION H₂O₂**
**Non-stimulée**

**PRODUCTION H₂O₂**
**stimulée (PMA)**

**PRODUCTION H₂O₂**

Fig 8. Production de ROS non-stimulée et stimulée (PMA) et pourcentage (%) de stimulation en réponse à PMA par des macrophages péritonéaux de femelles de souris suisses.

**ADHERENCE DES LYMPHOCYTES**

**CHIMIOTAXIE DES LYMPHOCYTES**

Fig 9. Indice d'adhérence (A.I.) et indice de chimiotaxie (C.I.) de lymphocytes péritonéaux de femelles de souris suisses.

EP 1 541 026 B1

## PROLIFERATION BASALE

## PROLIFERATION
## Stimulée par Con A

## PROLIFERATION
## Stimulée par LPS

Fig 10. Prolifération basale, prolifération stimulée par Con A, et prolifération stimulée par LPS par des lymphocytes péritonéaux de femelles de souris suisses.

PROLIFERATION
% de stimulation en réponse au ConA

PROLIFERATION
% de stimulation en réponse au LPS

Fig 11. Pourcentage (%) de stimulation en réponse à Con A et pourcentage de stimulation en réponse à LPS par des lymphocytes péritonéaux de femelles de souris suisses.

**PRODUCTION D' IL-2**

**ACTIVITE 'NATURAL KILLER'**

Fig 12. Production de IL-2 et activité 'natural killer' par des lymphocytes péritonéaux de femelles de souris suisses.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030104103 A1
- JP 62236453 B

- US 2176037 A

**Littérature non-brevet citée dans la description**

- **SINGH N et al.** Rheological and cookie making studies on wheat-rice flour blends. *Biosciences information service, Philadelphia, PA, US,* 1989
- **FRANKFURT-MAIN, DE ; NETTLES E M.** Functionality of oat-wheat composite flours in surgar-snap cookies: effect of method of milling, processing, oat cultivar, and wheat cultivar. *International Food Information Service (IFIS*
- Using millet flour and sodium steroyl-2-lactylate in the production of cookie from hard whear flour. *l'IFIS, Frankfurt*
- **MILLER HAROLD et al.** Antioxydant content of whole grain breakfast cereals, fruits and vegetables. *Journal of the American College of Nutrition,* Juin 2000, vol. 19 (3), 312S-319S
- **ZIELINSKI H et al.** Antioxydant activity and total phenolic in selected cereal grains and their different morphological fractions. *Biosciences information service, Philadelphia, PA, US,* Juin 2000
- **LLOYD BJ et al.** effects of commercial processing on antioxidant rice bran. *l'IFIS, Frankfurt*
- **SO YOUNG BU et al.** Antioxidant activity and total phenolic compound in grain extracts of wheat, barley, and oat. *l'IFIS, Frankfurt*
- **HARMAN D.** Free radical theory of aging. *Triangle,* 1973, vol. 12, 153-8
- **FLOYD RA ; HENSLEY K.** Oxidative stress in brain aging. Implications for therapeutics of neurodegenerative diseases. *Neurobiology of aging,* 2002, vol. 23, 795-807
- **SOHAL RS ; MOCKETT RJ ; ORR WC.** Mechanisms of aging: an appraisal of the oxidative stress hypothesis. *Free radical biology & medicine,* 2002, vol. 33, 575-86
- **GRIMBLE RF.** Nutritional modulation of immune function. *The Proceedings of the Nutrition Society,* 2001, vol. 60, 389-97
- **MEYDANI SN ; BEHARKA AA.** Vitamin E and immune response in the aged. *Bibliotheca nutritio et dieta,* 2001, 148-58
- **MORIGUCHI S ; MURAGA M.** Vitamin E and immunity. *Vitamins and hormones,* 2000, vol. 59, 305-36

- **MEYDANI M.** Dietary antioxidants modulation of aging and immune-endothelial cell interaction. *Mechanisms of ageing and development,* 1999, vol. 111, 123-32
- **BECK MA.** Selenium and host defence towards viruses. *The Proceedings of the Nutrition Society,* 1999, vol. 58, 707-11
- **HUGHES DA.** Effects of dietary antioxidants on the immune function of middle-aged adults. *The Proceedings of the Nutrition Society,* 1999, vol. 58, 79-84
- **DE LA FM ; FERRÀNDEZ MD ; BURGOS MS ; SOLER A ; PRIETO A ; MIQUEL- J.** Immune function in aged women is improved by ingestion of vitamins C and E. *Canadian journal of physiology and pharmacology,* 1998, vol. 76, 373-80
- **BURNS EA ; LEVENTHAL EA.** Aging, immunity, and cancer. *Cancer control,* 2000, vol. 7, 513-22
- **VIVEROS MP ; FERNÀNDEZ B ; GUAYERBAS N.** de la FM. Behavioral characterization of a mouse model of premature immunosenescence. *Journal of neuroimmunology,* 2001, vol. 114, 80-8
- **DE LA FM, MIÑANO M, MANUEL V, V et al.** Relation between exploratory activity and immune function in aged mice: a preliminary study. *Mechanisms of ageing and development,* 1998, vol. 102, 263-77
- **DE LA FM ; MINANO M ; MANUEL V, V et al.** Relation between exploratory activity and immune function in aged mice: a preliminary study. *Mechanisms of ageing and development,* 1998, vol. 102, 263-77
- **DE LA FM, MIÑANO M ; MANUEL V, V et al.** Relation between exploratory activity and immune function in aged mice: a preliminary study. *Mechanisms of ageing and development,* 1998, vol. 102, 263-77
- **DE LA FUENTE ; DEL RIO M ; FERRANDEZ MD ; HERNANZ A et al.** Adhérence, chimiotaxie, phagocytose et production de ROS intracellulaire (production d'anion superoxyde O2°) de macrophages. *Immunology,* 1991, 205-11

- **DEL RIO M ; HEMANZ A.** FM. Bombesin, gastrin-releasing peptide, and neuromedin C modulate murine lymphocyte prolifération through adherent accessory cells and activate protein kinase C. *Peptides,* 1994, vol. 15, 15-22
- **DEL RIO M ; HERNANZ A.** de la FM. Bombesin, gastrin-releasing peptide, and neuromedin C modulate murine lymphocyte proliferation through adherent accessory cells and activate protein kinase C. *Peptides,* 1994, vol. 15, 15-22
- **GUAYERBAS N ; PUERTO M ; VICTOR VM ; MIQUEL J.** de la FM. Leukocyte function and life span in a murine model of premature immunosenescence. *Experimental gerontology,* 2002, vol. 37, 249-56
- **FERRANDEZ MD.** de la FM. Effects of age, sex and physical exercise on the phagocytic process of murine peritoneal macrophages. *Acta physiologica Scandinavica,* 1999, vol. 166, 47-53
- **VICTOR VM ; GUAYERBAS N ; GARROTE D ; DEL RIO M.** Modulation of murine macrophage function by N-acetylcysteine in a model of endotoxic shock. *BioFactors,* 1999, vol. 10, 347-57
- **VICTOR VM.** de la FM. Changes in the superoxide production and other macrophage functions could be related to the mortality of mice with endotoxin-induced oxidative stress. *Physiological research,* 2003, vol. 52, 101-10
- **MOLINA HF ; HERNANZ A ; GUAZA C.** N-Acetylcysteine inhibition of encephalomyelitis Theiler's virus- induced nitric oxide and tumour necrosis factor-alpha production by murine astrocyte cultures. *BioFactors,* 1999, 187-93
- **CONNELLY L. ; JACOBS A. T. ; PALACIOS-CALLENDER M. ; MONCADA S. ; HOBBS A.** Macrophage endothelial nitric oxide synthase auto-regulates cellular activation and pro-inflammatory protein expression. *J. Biol. Chem.,* 2003
- **VICTOR VM.** Changes in the superoxide production and other macrophage functions could be related to the mortality of mice with endotoxin-induced oxidative stress. *Physiological research,* 2003, vol. 52, 101-10
- **CHIRICO S. ; SMITH C. ; MARCHANT C. ; MITHISON M. J. ; HALLIWELL B.** Lipid peroxidation in hyperlipemic patients. A study of plasma using an HPLC-based thiobarbituric acid test. *Free. Radic Res.,* 1993, vol. 19, 51-57
- **KUFTINEC, MM. ; MILLER, SA.** Alkaline and acid phosphatase activities during growth of long bones and mandibles. *Calcif. Tissue Res.,* 1972, vol. 9, 173-178
- **TIETZE, F.** Enzymic method for quantitative détermination of nanogram amounts of total and oxidized glutathione: applications to mammalian blood and other tissues. *Anal Biochem.,* 1969, vol. 27 (3), 502-22
- **SACCHETTA, P. ; DI COLA, D. ; FEDERICI, G.** *Alkaline hydrolysis of N-ethylmaleimide allows a rapid assay of glutathione disulfide in biological samples,* 1986
- **BIRD, RP. ; MCLELLAN, EA. ; BRUCE, WR.** Aberrant crypts, putative precancerous lésions in the study of the rôle of diet in the aetiology of colon cancer. *Cancer Surv.,* 1989, vol. 8, 189-200
- **PRETLOW, TP. ; O'RIORDAN, M. ; SOMICH, GA. ; AMINI, SB. ; PRETLOW, TG.** Aberrant crypts correlate with tumor incidence in F344 rats treated with azoxymethane and phytate. *Carcinogenesis,* 1992, vol. 13, 1509-1512
- **APANASOVICH, TV. ; SHEATHER, S. ; LUPTON, JR. ; POPOVIC, N. ; TURNER, ND. ; CHAPKIN, RS. ; BRABY, LA. ; CARROLL, RJ.** Testing for spatial corrélation in nonstationary binary data with application to aberrant crypt foci in colon carcinogenesis. *Biometrics,* 2003, vol. 59, 752-761